# EUROPEAN PATENT APPLICATION

(11) **EP 4 586 666 A1**
(43) Date of publication of application: **16.07.2025**
(21) Application number: 23862209.6
(22) Date of filing: 28.08.2023
(51) Int. Cl.: H04W 24/02

(54) **INFORMATION PROCESSING METHOD, APPARATUS AND DEVICE**

(30) Priority: 09.09.2022 CN 202211106177
(71) Applicant: Datang Mobile Communications Equipment Co., Ltd., Beijing 100085 (CN)
(72) Inventor: YAN, Xue, Beijing 100085 (CN); YAN, Nan, Beijing 100085 (CN); WANG, Ruiwei, Beijing 100085 (CN)
(74) Representative: Studio Torta S.p.A.
(86) International application number: PCT/CN2023/115265
(87) International publication number: WO 2024/051513

(57) **Abstract**

The present disclosure provides an information processing method, device and apparatus. The information processing method includes: recording by the UE, L1L2 mobility-related information; and sending the L1L2 mobility-related information to a network equipment. L1L2 stands for a layer 1 and/or a layer 2.

## Description

### CROSS-REFERENCE TO RELATED APPLICATION

The present application is filed based on and claims the priority of Chinese Application No. 202211106177.0 filed on September 9, 2022, entitled "information processing method, device and equipment", the disclosure of which are incorporated in their entireties by reference herein.

### TECHNICAL FIELD

The present disclosure relates to the field of communication technologies, and in particular to an information processing method, device and equipment.

### BACKGROUND

The current optimization of mobility is mainly for layer 3 (L3) mobility, and does not consider optimization of layer 1 and/or layer 2 (L1L2) mobility, resulting in that the L1L2 mobility may suffer from problems such as moving too early, moving too late, moving to a wrong transmission and receiving point (TRP), beam and/or cell, and frequent ping-pong handovers, which will affect L1L2 mobility performance and lead to failures.

From the above, optimization for L1L2 mobility cannot be achieved in the related art.

### SUMMARY

An object of embodiments of the present disclosure is to provide an information processing method, device and equipment, which can solve the problem in related art that optimization of L1L2 mobility cannot be achieved.

In order to solve the above problem, one embodiment of the present disclosure provides an information processing method, applied to a user equipment (UE), including:
recording by the UE, L1L2 mobility-related information;
sending the L1L2 mobility-related information to the network equipment; wherein the L1L2 stands for layer 1 and/or layer 2.

In some embodiments, the method further includes:
receiving L1L2 mobility configuration information sent by the network equipment; wherein the L1L2 mobility configuration information is used to perform L1L2 mobility.
In some embodiments, the recording L1L2 by the UE, mobility-related information, includes:
   recording the L1L2 mobility-related information in case of determining that a recording condition is met; wherein the recording condition includes one or more of the following:
   that is not received L1L2 mobility command sent by the network equipment, and a radio link failure (RLF) occurs in a source cell;
   that is not received L1L2 mobility command sent by the network equipment, and beam failure occurs at a source transmission and receiving point (TRP) and/or source beam;
   receiving the L1L2 mobility command sent by the network equipment, performing an L1L2 mobility command, but failing to access a target TRP and/or target beam;
   receiving the L1L2 mobility command sent by the network equipment, performing an L1L2 mobility command, but failing to access a target cell;
   receiving the L1L2 mobility command sent by the network equipment, performing an L1L2 mobility command, performing an L1L2 mobility command successfully but a beam failure occurring in the target TRP and/or target beam;
   receiving the L1L2 mobility command sent by the network equipment, performing an L1L2 mobility command, performing an L1L2 mobility command successfully but RLF occurring in the target cell;
   not receiving the L1L2 mobility command sent by the network equipment, receiving other mobility commands except the L1L2 mobility command, failure or success in performing other mobility commands, or success but critical failure; or
   receiving the L1L2 mobility command sent by the network equipment, performing the L1L2 mobility command, performing the L1L2 mobility successfully but a critical failure occurs during the L1L2 mobility procedure.

In some embodiments, the occurrence of critical failure includes one or more of the following situations:
a timing duration of an L1L2 mobility-related timer exceeds a first threshold;
when receiving the L1L2 mobility command, a timer T310 of a source cell is turned on and a timing duration exceeds a second threshold, or a timer T312 of a source cell is turned on and a timing duration exceeds a third threshold;
after completing the L1L2 mobility command, a timer T310 of a target cell is turned on and a timing duration exceeds a fourth threshold, or a timer T312 of the target cell is turned on and a timing duration exceeds a fifth threshold;
a duration of staying at the target TRP, target beam and/or target cell is less than a sixth threshold; or
frequent ping-pong handover of connected TRP, beam and/or cell.

In some embodiments, the method further includes:
before recording the L1L2 mobility-related information, receiving threshold information and/or trigger condition indication information sent by the network equipment;
wherein the threshold information includes one or more of the following:
   the first threshold;
   the second threshold;
   the third threshold;
   the fourth threshold;
   the fifth threshold; or
   the sixth threshold.

In some embodiments, the L1L2 mobility-related information includes one or more of the following:
cell, beam and/or TRP information;
time information; or
first information other than the cell, beam and/or TRP information and time information.

In some embodiments, the cell, beam and/or TRP information includes one or more of the following:
identifier information of a source TRP, source beam, target TRP and/or target beam;
measurement result information of a source TRP, source beam, target TRP and/or target beam;
measurement configuration information of a configured TRP and/or beam;
measurement result information of TRP and/or beam;
identifier information of TRP and/or beam recovered after failure;
measurement result information of TRP and/or beam recovered after failure;
pre-configured candidate cell configuration information;
identifier information of a source cell and a target cell;
measurement result information of a source cell and a target cell;
measurement result information of a candidate cell;
identifier information of a cell recovered and/or reestablished after failure; or
measurement result information of a cell recovered and/or reestablished after failure.

In some embodiments, the time information includes one or more of the following:
a time length from execution of the L1L2 mobility command to failure of the L1L2 mobility;
a time length from receiving the L1L2 mobility configuration information to RLF and/or beam failure;
a time length from receiving the L1L2 mobility configuration information to execution of the L1L2 mobility command;
a time length from receiving the L1L2 mobility configuration information to execution of other mobility command, where the other mobility command refers to mobility commands other than the L1L2 mobility commands;
a time length from receiving the L1L2 mobility configuration information to failure of execution of other mobility command;
duration when RLF occurs in a target cell from receiving L1L2 mobility configuration information to successful execution of other mobility command;
beam application time configured by the network equipment;
execution time of the L1L2 mobility command configured by the network equipment;
duration when a timer is turned on from receiving the L1L2 mobility command or L1L2 mobility configuration information to the beam application time;
duration when a timer expires from receiving the L1L2 mobility command or L1L2 mobility configuration information to the beam application time;
user plane data interruption time;
duration when RLF occurs in the target cell from execution of the L1L2 mobility command to success of execution of the L1L2; or
duration when RLF occurs in the target cell from receiving the L1L2 mobility configuration information to success of execution of the L1L2.

In some embodiments, the first information includes one or more of the following:
indication information of whether to fall back to a source TRP and/or source cell;
random access (RACH) related information;
timing advance (TA) related information;
mobility failure type indication information;
mobility failure cause;
pre-configured candidate cell uplink resource configuration information;
pre-configured candidate cell execution condition information;
indication information on whether to perform a RACH procedure or a RACH-less procedure; or
trigger reason, which is used to indicate a reason for triggering critical failure.

In some embodiments, the recording by the UE, L1L2 mobility-related information, includes:
recording the L1L2 mobility-related information in at least one new report and/or in at least one defined report.

In some embodiments, the method further includes:
sending notification information to the network equipment in a first manner; wherein the notification information is used to indicate that the UE stores the L1L2 mobility-related information, and
the first manner includes one or more of the following:
carrying an indication of availability of the L1L2 mobility-related information in an uplink radio resource control (RRC) message; or
using L1L2 signaling indication.

In some embodiments, before sending the L1L2 mobility-related information to the network equipment, the method further includes:
receiving an obtaining request for the L1L2 mobility-related information sent by the network equipment through a first message;
wherein the first message includes one or more of the following:
   UE information request message; or
   new message.

In some embodiments, the sending the L1L2 mobility-related information to a network equipment, includes:
sending the L1L2 mobility-related information to the network equipment through a second message according to the obtaining request;
wherein the second message includes one or more of the following:
   UE information response message; or
   new message.

In some embodiments, L1L2 mobility-related cells include: cell under single-connectivity; or a primary cell (PCell) of a primary cell group, a primary cell (PSCell) or secondary cell (SCell) of a secondary cell group under multi-connectivity.

One embodiment of the present disclosure further provides an information processing method, applied to a network equipment, including:
receiving L1L2 mobility-related information sent by a user equipment (UE);
performing corresponding L1L2 mobility optimization according to the L1L2 mobility-related information;
wherein the L1L2 stands for layer 1 and/or layer 2.

In some embodiments, the method further includes:
sending L1L2 mobility configuration information to the UE;
wherein the L1L2 mobility configuration information is used to perform L1L2 mobility.

One embodiment of the present disclosure further provides an information processing device, applied in a user equipment (UE), including: a memory, a transceiver, and a processor;
wherein the memory is used to store a computer program; the transceiver is used to send and receive data under the control of the processor; the processor is used to read the computer program in the memory and perform the following operations:
recording L1L2 mobility-related information;
sending the L1L2 mobility-related information to the network equipment through the transceiver;
wherein the L1L2 stands for layer 1 and/or layer 2.

In some embodiments, the operations further include:
receiving, through the transceiver, L1L2 mobility configuration information sent by the network equipment;
wherein the L1L2 mobility configuration information is used to perform L1L2 mobility.

In some embodiments, the recording L1L2 mobility-related information, includes:
recording the L1L2 mobility-related information in case of determining that a recording condition is met; wherein the recording condition includes one or more of the following:
that is not received L1L2 mobility command sent by the network equipment, and a radio link failure (RLF) occurs in a source cell;
that is not received L1L2 mobility command sent by the network equipment, and beam failure occurs at a source transmission and receiving point (TRP) and/or source beam;
receiving the L1L2 mobility command sent by the network equipment, performing an L1L2 mobility command, but failing to access a target TRP and/or target beam;
receiving the L1L2 mobility command sent by the network equipment, performing an L1L2 mobility command, but failing to access a target cell;
receiving the L1L2 mobility command sent by the network equipment, performing an L1L2 mobility command, performing an L1L2 mobility command successfully but a beam failure occurring in the target TRP and/or target beam;
receiving the L1L2 mobility command sent by the network equipment, performing an L1L2 mobility command, performing an L1L2 mobility command successfully but RLF occurring in the target cell;
not receiving the L1L2 mobility command sent by the network equipment, receiving other mobility commands except the L1L2 mobility command, failure or success in performing other mobility commands, or success but critical failure; or
receiving the L1L2 mobility command sent by the network equipment, performing the L1L2 mobility command, performing the L1L2 mobility successfully but a critical failure occurs during the L1L2 mobility procedure.

In some embodiments, the occurrence of critical failure includes one or more of the following situations:
a timing duration of an L1L2 mobility-related timer exceeds a first threshold;
when receiving the L1L2 mobility command, a timer T310 of a source cell is turned on and a timing duration exceeds a second threshold, or a timer T312 of a source cell is turned on and a timing duration exceeds a third threshold;
after completing the L1L2 mobility command, a timer T310 of a target cell is turned on and a timing duration exceeds a fourth threshold, or a timer T312 of the target cell is turned on and a timing duration exceeds a fifth threshold;
a duration of staying at the target TRP, target beam and/or target cell is less than a sixth threshold; or
frequent ping-pong handover of connected TRP, beam and/or cell.

In some embodiments, the operations further include:
before recording the L1L2 mobility-related information, receiving, through the transceiver, threshold information and/or trigger condition indication information sent by the network equipment;
wherein the threshold information includes one or more of the following:
   the first threshold;
   the second threshold;
   the third threshold;
   the fourth threshold;
   the fifth threshold; or
   the sixth threshold.

In some embodiments, the L1L2 mobility-related information includes one or more of the following:
cell, beam and/or TRP information;
time information; or

first information other than the cell, beam and/or TRP information and time information.

In some embodiments, the cell, beam and/or TRP information includes one or more of the following:
identifier information of a source TRP, source beam, target TRP and/or target beam;
measurement result information of a source TRP, source beam, target TRP and/or target beam;
measurement configuration information of a configured TRP and/or beam;
measurement result information of TRP and/or beam;
identifier information of TRP and/or beam recovered after failure;
measurement result information of TRP and/or beam recovered after failure;
pre-configured candidate cell configuration information;
identifier information of a source cell and a target cell;
measurement result information of a source cell and a target cell;
measurement result information of a candidate cell;
identifier information of a cell recovered and/or reestablished after failure; or
measurement result information of a cell recovered and/or reestablished after failure.

In some embodiments, the time information includes one or more of the following:
a time length from execution of the L1L2 mobility command to failure of the L1L2 mobility;
a time length from receiving the L1L2 mobility configuration information to RLF and/or beam failure;
a time length from receiving the L1L2 mobility configuration information to execution of the L1L2 mobility command;
a time length from receiving the L1L2 mobility configuration information to execution of other mobility command, where the other mobility command refers to mobility commands other than the L1L2 mobility commands;
a time length from receiving the L1L2 mobility configuration information to failure of execution of other mobility command;
duration when RLF occurs in a target cell from receiving L1L2 mobility configuration information to successful execution of other mobility command;
beam application time configured by the network equipment;
execution time of the L1L2 mobility command configured by the network equipment;
duration when a timer is turned on from receiving the L1L2 mobility command or L1L2 mobility configuration information to the beam application time;
duration when a timer expires from receiving the L1L2 mobility command or L1L2 mobility configuration information to the beam application time;
user plane data interruption time;
duration when RLF occurs in the target cell from execution of the L1L2 mobility command to success of execution of the L1L2; or
duration when RLF occurs in the target cell from receiving the L1L2 mobility configuration information to success of execution of the L1L2.

In some embodiments, the first information includes one or more of the following:
indication information of whether to fall back to a source TRP and/or source cell;
random access (RACH) related information;
timing advance (TA) related information;
mobility failure type indication information;
mobility failure cause;
pre-configured candidate cell uplink resource configuration information;
pre-configured candidate cell execution condition information;
indication information on whether to perform a RACH procedure or a RACH-less procedure; or
trigger reason, which is used to indicate a reason for triggering critical failure.

In some embodiments, the recording L1L2 mobility-related information, includes:
recording the L1L2 mobility-related information in at least one new report and/or in at least one defined report.

In some embodiments, the operations further include:
sending, through the transceiver, notification information to the network equipment in a first manner; wherein the notification information is used to indicate that the UE stores the L1L2 mobility-related information, and
the first manner includes one or more of the following:
   carrying an indication of availability of the L1L2 mobility-related information in an uplink radio resource control (RRC) message; or
   using L1L2 signaling indication.

In some embodiments, the operations further include:
before sending the L1L2 mobility-related information to the network equipment, receiving, through the transceiver, an obtaining request for the L1L2 mobility-related information sent by the network equipment through a first message;
wherein the first message includes one or more of the following:
   UE information request message; or
   new message.

In some embodiments, the sending the L1L2 mobility-related information to a network equipment, includes:
sending the L1L2 mobility-related information to the network equipment through a second message according to the obtaining request;
wherein the second message includes one or more of the following:
   UE information response message; or
   new message.

In some embodiments, L1L2 mobility-related cells include: cell under single-connectivity; or a primary cell (PCell) of a primary cell group, a primary cell (PSCell) or secondary cell (SCell) of a secondary cell group under multi-connectivity.

One embodiment of the present disclosure further provides an information processing device, applied in a network equipment, including: a memory, a transceiver, and a processor;
wherein the memory is used to store a computer program; the transceiver is used to send and receive data under the control of the processor; the processor is used to read the computer program in the memory and perform the following operations:
receiving, through the transceiver, L1L2 mobility-related information sent by a user equipment (UE);
performing corresponding L1L2 mobility optimization according to the L1L2 mobility-related information;
wherein the L1L2 stands for layer 1 and/or layer 2.

In some embodiments, the operations further include:
sending, through the transceiver, L1L2 mobility configuration information to the UE;
wherein the L1L2 mobility configuration information is used to perform L1L2 mobility.

One embodiment of the present disclosure further provides an information processing apparatus, applied to a user equipment (UE), including:
a first recording unit used to record L1L2 mobility-related information;
a first sending unit used to send the L1L2 mobility-related information to the network equipment;
wherein the L1L2 stands for layer 1 and/or layer 2.

One embodiment of the present disclosure further provides an information processing, applied to a network equipment, including:
a fourth receiving unit used to receive L1L2 mobility-related information sent by a user equipment (UE);
a first processing unit used to perform corresponding L1L2 mobility optimization according to the L1L2 mobility-related information;
wherein the L1L2 stands for layer 1 and/or layer 2.

In some embodiments, the method further includes:
a third sending unit used to send L1L2 mobility configuration information to the UE;
wherein the L1L2 mobility configuration information is used to perform L1L2 mobility.

One embodiment of the present disclosure further provides a processor-readable storage medium, including a computer program stored thereon; wherein the computer program is used to cause a processor to perform the steps in the method on the UE side or on the network equipment side.

The beneficial effects of the above technical solution in the present disclosure are as follows.

In the above technical solution, according to the information processing method, by recording L1L2 mobility-related information and sending the L1L2 mobility-related information to the network equipment, where the L1L2 stands for layer 1 and/or layer 2, it can support the network equipment to perform corresponding L1L2 mobility optimization according to L1L2 mobility-related information, thereby supporting optimization for L1L2 mobility.

### BRIEF DESCRIPTION OF THE DRAWINGS

FIG. 1 is a schematic diagram of a wireless communication system architecture according to an embodiment of the present disclosure;
FIG. 2 is a first schematic flowchart of an information processing method according to an embodiment of the present disclosure;
FIG. 3 is a second schematic flowchart of an information processing method according to an embodiment of the present disclosure;
FIG. 4 is a first schematic diagram of an information processing device according to an embodiment of the present disclosure;
FIG. 5 is a second schematic diagram of an information processing device according to an embodiment of the present disclosure;
FIG. 6 is a first schematic diagram of an information processing equipment according to an embodiment of the present disclosure; and
FIG. 7 is a second schematic diagram of an information processing equipment according to an embodiment of the present disclosure.

### DETAILED DESCRIPTION

The technical solutions in the embodiments of the present disclosure will be clearly and completely described below with reference to the accompanying drawings in the embodiments of the present disclosure. Obviously, the described embodiments are only some embodiments of the present disclosure, rather than all embodiments. Based on the embodiments in the present disclosure, all other embodiments obtained by those of ordinary skill in the art without creative efforts fall within the scope of protection of the present disclosure.

In the embodiment of the present disclosure, the term "and/or" describes association relationship of associated objects, indicating that there can be three relationships, for example, A and/or B means that there are three situations: there is A alone, there are both A and B, there is B alone. The character "/" generally indicates that before and after related objects are in an "or" relationship.

In the embodiment of the present disclosure, the term "plurality" refers to two or more than two, and other quantifiers are similar.

It is explained here that the technical solutions provided in the embodiments of the present disclosure can be applied to various systems, especially fifth generation mobile communication technology (5G) systems. For example, an applicable system may be global system of mobile communication (GSM) system, code division multiple access (CDMA) system, wideband code division multiple access (WCDMA) general packet radio service (GPRS) system, long term evolution (LTE) system, LTE frequency division duplex (FDD) system, LTE time division duplex (TDD) system, Long term evolution advanced (LTE-A) system, universal mobile telecommunication system (UMTS), worldwide interoperability for microwave access (WiMAX) system, 5G New Radio, NR) system, etc. each of these various systems include a terminal device and a network equipment. The system may further include a core network part, such as an evolved packet system (EPS), a 5G system (5GS), etc.

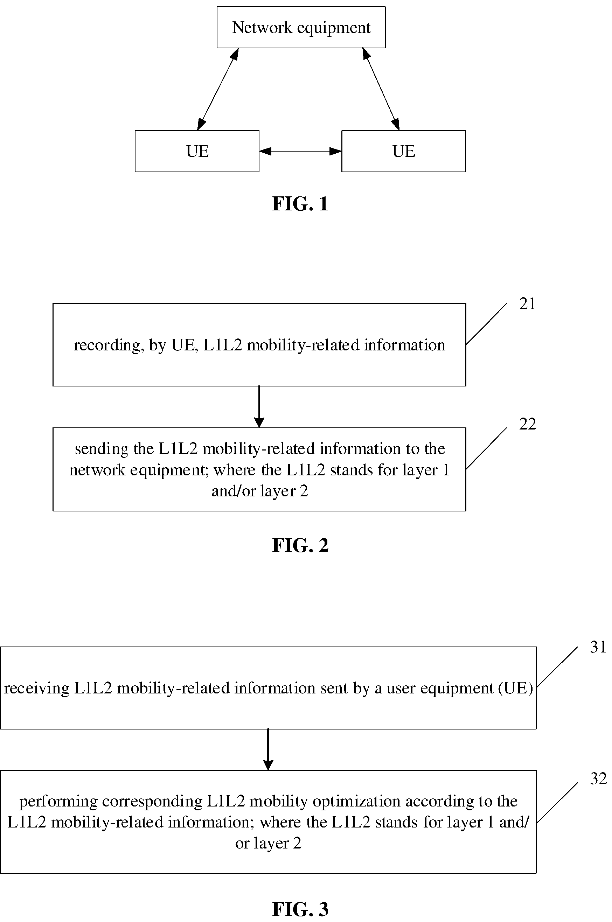

FIG. 1 shows a block diagram of a wireless communication system to which embodiments of the present disclosure are applicable. The wireless communication system includes a terminal device (also referred to as terminal for short) and network equipment.

The terminal device involved in the embodiments of the present disclosure is a device for providing voice data and/or any other service data to a user, e.g., a handheld device having a wireless connection function, or any other processing device capable of being connected to a wireless modem. In different systems, the terminal device may have different names. For example, in a 5G system, the terminal device is called as user equipment (UE). A wireless terminal device communicates with one or more Core Networks (CNs) via a Radio Access Network (RAN). The wireless terminal device may be a mobile terminal, e.g., a mobile phone (or cellular phone), or a computer having the mobile terminal device, e.g., a portable, pocket-sized, handheld, built-in or vehicle-mounted mobile device, which are capable of exchanging voice and/or data with the RAN. For example, the wireless terminal device may be a Personal Communication Service (PCS) telephone, a cordless telephone, a Session Initiation Protocol (SIP) phone, a Wireless Local Loop (WLL) station, or a Personal Digital Assistant (PDA). In addition, the wireless terminal device may also be called as system, subscriber unit, subscriber station, mobile station, mobile, remote station, access point, remote terminal, access terminal, user terminal, user agent or user device, which will not be particularly defined herein.

The network equipment involved in the embodiment of the present disclosure may be a base station which includes a plurality of cells providing services for the UE. Depending on different application scenarios, the base station is called as an access point, a device in an access network in communication with the wireless terminal device through one or more sectors on an air interface, or any other name. The network equipment is used to exchange a received air frame with an Internet Protocol (IP) packet, and it serves as a router between the wireless terminal device and the other part of the access network. The other part of the access network includes an IP communication network. The network equipment may further coordinate attribute management on the air interface. For example, the network equipment involved in the embodiments of the present disclosure is a Base Transceiver Station (BTS) in the Global System for Mobile communications (GSM) or Code Division Multiple Access (CDMA) system, a NodeB in the Wide-band Code Division Multiple Access (WCDMA) system, an evolutional Node B (eNB, or e-NodeB) in the LTE system, a 5G base station (gNB) in 5G network architecture (next generation system), a Home evolved Node B (HeNB), a relay node, a femto, or a pico, which will not be particularly defined herein. In some network structures, the network equipment includes a Centralized Unit (CU) and a Distributed Unit (DU), which may be geographically separated from each other.

Multi Input Multi Output (MIMO) transmission is performed between the network equipment and the terminal device each with one or more antennae, and the MIMO transmission is Single User MIMO (SU-MIMO) or Multiple User MIMO (MU-MIMO). Depending on the form of an antenna combination and the quantity of antennae, the MIMO transmission may be 2D-MIMO, 3D-MIMO, FD-MIMO or massive-MIMO, and it may also be diversity transmission, precoding transmission or beam-forming transmission.

The content involved in the solution provided in the embodiment of the present disclosure is first introduced below.

### (1) L1L2 mobility without serving cell change

The L1L2 mobility without serving cell change scenario is currently discussed. This scenario is actually to use a low-level (layer 1 and/or layer 2, L1L2) command to switch and/or change transmission and receiving point (TRP) without serving cell change. Its basic operation mechanism is that: the network configures beam measurement configuration information of each candidate TRP for UE (terminal); after receiving the configuration, the UE performs beam measurement and sends a measurement result to the network; based on the beam measurement result sent by the UE, the network learns that a signal quality of the current TRP is poor and there are other TRPs with better signal quality, and then the network sends L1L2 instruction to instruct the UE to switch and/or change from a TRP with poor signal quality to a TRP with better signal quality for operation.

### (2) L1L2 mobility with serving cell change

Currently, the L1L2 mobility with serving cell change scenario will be discussed. This scenario is actually to use a low-level (L1L2) command to switch and/or change transmission and receiving point (TRP) with serving cell change. Its basic operation mechanism takes the above operation mechanism (operation mechanism of L1L2 mobility without serving cell change) as the baseline.

### (3) Layer 3 (L3) mobility optimization

For the current L3 mobility optimization, the main mechanism is that when a failure or critical failure is detected, the UE records some mobility-related parameters and report them to the network side. The network side optimizes corresponding mobility decision mechanism and corresponding configuration information by analyzing the mobility parameters reported by the UE.

Based on the above, embodiments of the present disclosure provide an information processing method, device and equipment, which can solve the problem in related art that optimization for L1L2 mobility cannot be achieved. The method, device and equipment are based on the same application concept, since the methods, devices and equipment solve the problems in a similar manner, implementation of the methods, devices and equipment can refer to each other, and the repeated parts will not be repeated.

An information processing method provided in one embodiment of the present disclosure is applied to a UE, as shown in FIG. 2, and includes:
Step 21: recording by the UE, L1L2 mobility-related information;
Step 22: sending the L1L2 mobility-related information to the network equipment; where the L1L2 stands for layer 1 and/or layer 2.

L1L2 mobility may include: L1 mobility, L2 mobility, or L1 and L2 mobility. The L1 mobility means that the network notifies the UE to perform cell addition or change by sending Downlink Control Information (DCI) instruction. The L2 mobility means that the network notifies the UE to perform cell addition or change by sending Media Access Control Control Element (MAC CE) command. The L1 and L2 mobility means that the network notifies the UE to perform cell addition or change by sending a combination of MAC CE and DCI instructions.

According to the information processing method provided in the embodiment of the present disclosure, by recording L1L2 mobility-related information and sending the L1L2 mobility-related information to the network equipment, where the L1L2 stands for layer 1 and/or layer 2, it can support the network equipment to perform corresponding L1L2 mobility optimization according to L1L2 mobility-related information, thereby supporting optimization for L1L2 mobility.

Further, the information processing method further includes: receiving L1L2 mobility configuration information sent by the network equipment; where the L1L2 mobility configuration information is used to perform L1L2 mobility.

This can assist with performing L1L2 mobility.

In the embodiment of the present disclosure, the recording L1L2 mobility-related information, includes: recording the L1L2 mobility-related information in case of determining that a recording condition is met; where the recording condition includes one or more of the following: 1) that is not received L1L2 mobility command sent by the network equipment, and a radio link failure (RLF) occurs in a source cell; 2) that is not received L1L2 mobility command sent by the network equipment, and beam failure occurs at a source transmission and receiving point (TRP) and/or source beam; 3) receiving the L1L2 mobility command sent by the network equipment, performing an L1L2 mobility command, but failing to access a target TRP and/or target beam; 4) receiving the L1L2 mobility command sent by the network equipment, performing an L1L2 mobility command, but failing to access a target cell; 5) receiving the L1L2 mobility command sent by the network equipment, performing an L1L2 mobility command, performing an L1L2 mobility command successfully but a beam failure occurring in the target TRP and/or target beam; 6) receiving the L1L2 mobility command sent by the network equipment, performing an L1L2 mobility command, performing an L1L2 mobility command successfully but RLF occurring in the target cell; 7) not receiving the L1L2 mobility command sent by the network equipment, receiving other mobility commands except the L1L2 mobility command, failure or success in performing other mobility commands, or success but critical failure; or, 8) receiving the L1L2 mobility command sent by the network equipment, performing the L1L2 mobility command, performing the L1L2 mobility successfully but a critical failure occurs during the L1L2 mobility procedure.

In this way, the recording can be triggered in a variety of ways. "beam failure occurring in the target TRP and/or target beam" in 5) may be beam failure occurring at the target TRP and/or target beam within a first duration; "RLF occurring in the target cell" in 6) may be RLF occurring in the target cell within a second duration, which is not limited thereto.

In the embodiment of the present disclosure, the occurrence of critical failure includes one or more of the following situations: 1) a timing duration of an L1L2 mobility-related timer exceeds a first threshold; 2) when receiving the L1L2 mobility command, a timer T310 of a source cell is turned on and a timing duration exceeds a second threshold, or a timer T312 of a source cell is turned on and a timing duration exceeds a third threshold; 3) after completing the L1L2 mobility command, a timer T310 of a target cell is turned on and a timing duration exceeds a fourth threshold, or a timer T312 of the target cell is turned on and a timing duration exceeds a fifth threshold; 4) a duration of staying at the target TRP, target beam and/or target cell is less than a sixth threshold; or, 5) frequent ping-pong handover of connected TRP, beam and/or cell.

In this way, the situation of "occurrence of critical failure" can be accurately obtained. The timer T310 is a control timer for radio link failure. When T310 is turned on and times out, the UE determines that a radio link failure has occurred in the UE, which may trigger a reconstruction procedure, or in a dual-connectivity scenario, may trigger sending master cell group (MCG) failure information or secondary cell group (SCG) failure information message. The timer T312 is a measurement reporting timer, which is mainly used under the premise that T310 is running. When T312 times out, the behavior of the UE is the same as the behavior of the UE when the T310 times out. "frequent ping-pong handover of connected TRP, beam and/or cell" may also be understood as: the number of ping-pong handover occurring in the connected TRP, beam and/or cell within a fourth duration exceeds a seventh threshold, but is not limited to this.

Further, the information processing method further includes: before recording the L1L2 mobility-related information, receiving threshold information and/or trigger condition indication information sent by the network equipment; where the threshold information includes one or more of the following: the first threshold; the second threshold; the third threshold; the fourth threshold; the fifth threshold; or, the sixth threshold.

In this way, the threshold information and/or trigger condition indication information can be accurately obtained. The trigger condition indication information can include at least one of the following:
explicit indication information configured by the network indicating that when a timing duration of an L1L2 mobility-related timer exceeds a first threshold, the UE has a critical failure and records the L1L2 mobility-related information;
implicit indication information configured by the network, that is, the network configures a first threshold, and when the UE receives the first threshold sent by the network, it means that when the timing duration of the L1L2 mobility-related timer exceeds the first threshold, the UE has a critical failure and records the L1L2 mobility-related information;
explicit indication information configured by the network indicating that when the L1L2 mobility command is received, a timer T310 of a source cell is turned on and a timing duration exceeds a second threshold or a timer T312 of the source cell is turned on and a timing duration exceeds a third threshold, the UE has a critical failure, and records the L1L2 mobility-related information;
implicit indication information configured by the network, that is, the network configures a second threshold or a third threshold, and when the UE receives the second threshold or the third threshold sent by the network, it means that when the L1L2 mobility command is received, the timer T310 of the source cell is turned on and the timing duration exceeds the second threshold or the timer T312 of the source cell is turned on and the timing duration exceeds the third threshold, the UE has a critical failure, and records the L1L2 mobility-related information;
explicit indication information configured by the network indicating that after completing the L1L2 mobility command, a timer T310 of a target cell is turned on and a timing duration exceeds a fourth threshold or a timer T312 of the target cell is turned on and a timing duration exceeds a fifth threshold, the UE has a critical failure, and records the L1L2 mobility-related information;
implicit indication information configured by the network, i.e., the network configures a fourth threshold or a fifth threshold, and when the UE receives the fourth threshold or the fifth threshold sent by the network, it means that after completing the L1L2 mobility command, the timer T310 of the target cell has been started and a timing duration exceeds the fourth threshold or the timer T312 of the target cell has been started and the timing duration exceeds the fifth threshold, the UE has a critical failure, and records the L1L2 mobility-related information;
explicit indication information configured by the network indicating that when a duration of staying in a target TRP, target beam and/or target cell is less than a sixth threshold, the UE has a critical failure, and records the L1L2 mobility-related information;
implicit indication information configured by the network, that is, the network configures a sixth threshold, and when the UE receives the sixth threshold sent by the network, it indicates that when a duration of staying in a target TRP, target beam and/or target cell is less than a sixth threshold, the UE has a critical failure, and records the L1L2 mobility-related information;
explicit indication information configured by the network indicating that when a connected TRP, beam and/or cell undergoes frequent ping-pong switching, the UE has a critical failure, and records the L1L2 mobility-related information.

In the embodiment of the present disclosure, the L1L2 mobility-related information includes one or more of the following: 1) cell, beam and/or TRP information; 2) time information; or, 3) first information other than the cell, beam and/or TRP information and time information.

The cell, beam and/or TRP information includes one or more of the following: 1) identifier information of a source TRP, source beam, target TRP and/or target beam; 2) measurement result information of a source TRP, source beam, target TRP and/or target beam; 3) measurement configuration information of a configured TRP and/or beam; 4) measurement result information of TRP and/or beam; 5) identifier information of TRP and/or beam recovered after failure; 6) measurement result information of TRP and/or beam recovered after failure; 7) pre-configured candidate cell configuration information; 8) identifier information of a source cell and a target cell; 9) measurement result information of a source cell and a target cell; 10) measurement result information of a candidate cell; 11) identifier information of a cell recovered and/or reestablished after failure; or, 12) measurement result information of a cell recovered and/or reestablished after failure.

In the embodiment of the present disclosure, the time information includes one or more of the following: 1) a time length from execution of the L1L2 mobility command to failure of the L1L2 mobility; 2) a time length from receiving the L1L2 mobility configuration information to RLF and/or beam failure; 3) a time length from receiving the L1L2 mobility configuration information to execution of the L1L2 mobility command; 4) a time length from receiving the L1L2 mobility configuration information to execution of other mobility command, where the other mobility command refers to mobility commands other than the L1L2 mobility commands; 5) a time length from receiving the L1L2 mobility configuration information to failure of execution of other mobility command; 6) duration when RLF occurs in a target cell from receiving L1L2 mobility configuration information to successful execution of other mobility command; 7) beam application time configured by the network equipment; 8) execution time of the L1L2 mobility command configured by the network equipment; 9) duration when a timer is turned on from receiving the L1L2 mobility command or L1L2 mobility configuration information to the beam application time; 10) duration when a timer expires from receiving the L1L2 mobility command or L1L2 mobility configuration information to the beam application time; 11) user plane data interruption time; 12) duration when RLF occurs in the target cell from execution of the L1L2 mobility command to success of execution of the L1L2; or, 13) duration when RLF occurs in the target cell from receiving the L1L2 mobility configuration information to success of execution of the L1L2.

In this way, diversified time information can be obtained. The "failure of the L1L2 mobility" in 1) above may include two situations: one is TRP or beam switching failure, and the other is cell switching failure, but it is not limited to this. The "duration when RLF occurs in a target cell" in 7) above may be a duration when RLF occurs within a third duration of staying in the target cell", but is not limited to this.

In the embodiment of the present disclosure, the first information includes one or more of the following: 1) indication information of whether to fall back to a source TRP and/or source cell; 2) random access (RACH) related information; 3) timing advance (TA) related information; 4) mobility failure type indication information; 5) mobility failure cause; 6) pre-configured candidate cell uplink resource configuration information; 7) pre-configured candidate cell execution condition information; 8) indication information on whether to perform a RACH procedure or a RACH-less procedure; or, 9) trigger reason, which is used to indicate a reason for triggering critical failure.

In this way, more L1L2 mobility-related information can be obtained. The "indication information" in 1) above may be indication information in the case of L1L2 mobility failure, and the indication information indicates that when the UE fails to perform L1L2 mobility, the UE falls back to the source TRP and/or the source cell and continues to maintain connection with the source TRP and/or the source cell. The "RACH related information" in 2) above may refer to RACH related information in the L1L2 mobility procedure and/or RACH related information configured by the network. The "TA related information" in the 3) above may refer to TA related information preconfigured by the network and/or TA information carried in the L1L2 mobility command. The "mobility failure type indication information" in the above 4) may indicate that this failure is an L1L2 mobility failure. The "mobility failure cause" in 5) above may be a reason for the L1L2 mobility failure, such as TRP and/or beam switching failure, application target cell configuration failure, etc. The "preconfigured candidate cell uplink resource configuration information" in 6) above may be candidate cell uplink resource configuration information pre-configured by the network for the UE to perform RACH-less L1L2 mobility. The "preconfigured candidate cell execution condition information" in 7) above may be candidate cell execution condition information preconfigured by the network. The "indication information" in the 8) above is used to indicate whether the L1L2 mobility performed by the UE this time is based on RACH or RACH-less. The "triggering reason" in the 9) above is mainly is mainly for recording in the case of critical failure, recording the L1L2 mobility-related information that the UE is triggered to record due to which critical failure situation, such as an indication information indicating that the L1L2 mobility critical failure related information is recorded this time because a timing duration of an L1L2 mobility-related timer exceeds a first threshold, but is not limited to this.

In the embodiment of the present disclosure, the recording L1L2 mobility-related information, includes: recording the L1L2 mobility-related information in at least one new report and/or in at least one defined report.

In this way, the L1L2 mobility-related information can be recorded in a variety of ways. "recording the L1L2 mobility-related information in at least one new report and/or in at least one defined report" indicates that the UE can record the L1L2 mobility-related information in a new report or a defined report. The defined report may include: radio link failure (RLF) report, successful handover report (SHR), random access (RACH) report, connection establishment failure (CEF) report, etc. Specifically, for example, the L1L2 mobility-related information recorded in the critical failure scenario in this solution can be recorded in a newly defined report or in an existing SHR report. In addition, the L1L2 mobility-related information recorded by the UE in this solution can be recorded in one report, or in different reports. For example, the L1L2 mobility-related information recorded in the critical failure scenario in this solution can be recorded in the SHR report, and other L1L2 mobility-related information can be recorded in the RLF report.

Further, the information processing method further includes: sending notification information to the network equipment in a first manner; where the notification information is used to indicate that the UE stores the L1L2 mobility-related information, and the first manner includes one or more of the following: carrying an indication of availability of the L1L2 mobility-related information in an uplink radio resource control (RRC) message; or using L1L2 signaling indication.

In this way, the network equipment can be notified in various ways: the UE stores the L1L2 mobility-related information. "using L1L2 signaling indication" includes: using L2 signaling indication, where the L2 signaling indication can be a Media Access Control Control Element (MAC CE) mode indication; using L1 signaling indication, where the L1 signaling indication can be a downlink control information (DCI) indication, or a combination of the above two modes; but the present disclosure is not limited thereto.

In the embodiment of the present disclosure, before sending the L1L2 mobility-related information to the network equipment, the method further includes: receiving an obtaining request for the L1L2 mobility-related information sent by the network equipment through a first message; where the first message includes one or more of the following: UE information request message; or new message.

This can support transmission of L1L2 mobility-related information according to requirements of the network equipment.

In the embodiment of the present disclosure, the sending the L1L2 mobility-related information to a network equipment, includes: sending the L1L2 mobility-related information to the network equipment through a second message according to the obtaining request; where the second message includes one or more of the following: UE information response message; or, new message.

In this way, the L1L2 mobility-related information can be transmitted according to requirements of the network equipment.

In the embodiment of the present disclosure, L1L2 mobility-related cells include: cell under single-connectivity; or a primary cell (PCell) of a primary cell group, a primary cell (PSCell) or secondary cell (SCell) of a secondary cell group under multi-connectivity.

This supports L1L2 mobility in various scenarios.

One embodiment of the present disclosure further provides an information processing method, applied to a network equipment, as shown in FIG. 3, including:
Step 31: receiving L1L2 mobility-related information sent by a user equipment (UE);
Step 32: performing corresponding L1L2 mobility optimization according to the L1L2 mobility-related information; where the L1L2 stands for layer 1 and/or layer 2.

L1L2 mobility may include: L1 mobility, L2 mobility, or L1 and L2 mobility. The L1 mobility means that the network notifies the UE to perform cell addition or change by sending Downlink Control Information (DCI) instruction. The L2 mobility means that the network notifies the UE to perform cell addition or change by sending Media Access Control Control Element (MAC CE) command. The L1 and L2 mobility means that the network notifies the UE to perform cell addition or change by sending a combination of MAC CE and DCI instructions.

According to the information processing method provided in the embodiment of the present disclosure, by receiving L1L2 mobility-related information sent by a user equipment (UE) and performing corresponding L1L2 mobility optimization according to the L1L2 mobility-related information, where the L1L2 stands for layer 1 and/or layer 2, it can achieve optimization for L1L2 mobility.

Further, the information processing method further includes: sending L1L2 mobility configuration information to the UE; where the L1L2 mobility configuration information is used to perform L1L2 mobility.

This can assist with performing L1L2 mobility.

In the embodiment of the present disclosure, the L1L2 mobility-related information is recorded by the UE in case of determining that a recording condition is met; where the recording condition includes one or more of the following: 1) that is not received L1L2 mobility command sent by the network equipment, and a radio link failure (RLF) occurs in a source cell; 2) that is not received L1L2 mobility command sent by the network equipment, and beam failure occurs at a source transmission and receiving point (TRP) and/or source beam; 3) receiving the L1L2 mobility command sent by the network equipment, performing an L1L2 mobility command, but failing to access a target TRP and/or target beam; 4) receiving the L1L2 mobility command sent by the network equipment, performing an L1L2 mobility command, but failing to access a target cell; 5) receiving the L1L2 mobility command sent by the network equipment, performing an L1L2 mobility command, performing an L1L2 mobility command successfully but a beam failure occurring in the target TRP and/or target beam; 6) receiving the L1L2 mobility command sent by the network equipment, performing an L1L2 mobility command, performing an L1L2 mobility command successfully but RLF occurring in the target cell; 7) not receiving the L1L2 mobility command sent by the network equipment, receiving other mobility commands except the L1L2 mobility command, failure or success in performing other mobility commands, or success but critical failure; or, 8) receiving the L1L2 mobility command sent by the network equipment, performing the L1L2 mobility command, performing the L1L2 mobility successfully but a critical failure occurs during the L1L2 mobility procedure.

In this way, the recording can be triggered in a variety of ways. "beam failure occurring in the target TRP and/or target beam" in 5) may be beam failure occurring at the target TRP and/or target beam within a first duration; "RLF occurring in the target cell" in 6) may be RLF occurring in the target cell within a second duration, which is not limited thereto.

In the embodiment of the present disclosure, the occurrence of critical failure includes one or more of the following situations: 1) a timing duration of an L1L2 mobility-related timer exceeds a first threshold; 2) when receiving the L1L2 mobility command, a timer T310 of a source cell is turned on and a timing duration exceeds a second threshold, or a timer T312 of a source cell is turned on and a timing duration exceeds a third threshold; 3) after completing the L1L2 mobility command, a timer T310 of a target cell is turned on and a timing duration exceeds a fourth threshold, or a timer T312 of the target cell is turned on and a timing duration exceeds a fifth threshold; 4) a duration of staying at the target TRP, target beam and/or target cell is less than a sixth threshold; or, 5) frequent ping-pong handover of connected TRP, beam and/or cell.

In this way, the situation of "occurrence of critical failure" can be accurately obtained. The timer T310 is a control timer for radio link failure. When T310 is turned on and times out, the UE determines that a radio link failure has occurred in the UE, which may trigger a reconstruction procedure, or in a dual-connectivity scenario, may trigger sending master cell group (MCG) failure information or secondary cell group (SCG) failure information message. The timer T312 is a measurement reporting timer, which is mainly used under the premise that T310 is running. When T312 times out, the behavior of the UE is the same as the behavior of the UE when the T310 times out. "frequent ping-pong handover of connected TRP, beam and/or cell" may also be understood as: the number of ping-pong handover occurring in the connected TRP, beam and/or cell within a fourth duration exceeds a seventh threshold, but is not limited to this.

Further, the information processing method further includes: before receiving the L1L2 mobility-related information sent by the UE, sending threshold information and/or trigger condition indication information to the UE; where the threshold information includes one or more of the following: the first threshold; the second threshold; the third threshold; the fourth threshold; the fifth threshold; or, the sixth threshold.

In this way, the threshold information and/or trigger condition indication information can be accurately obtained. The trigger condition indication information can include at least one of the following:
explicit indication information configured by the network indicating that when a timing duration of an L1L2 mobility-related timer exceeds a first threshold, the UE has a critical failure and records the L1L2 mobility-related information;
implicit indication information configured by the network, that is, the network configures a first threshold, and when the UE receives the first threshold sent by the network, it means that when the timing duration of the L1L2 mobility-related timer exceeds the first threshold, the UE has a critical failure and records the L1L2 mobility-related information;
explicit indication information configured by the network indicating that when the L1L2 mobility command is received, a timer T310 of a source cell is turned on and a timing duration exceeds a second threshold or a timer T312 of the source cell is turned on and a timing duration exceeds a third threshold, the UE has a critical failure, and records the L1L2 mobility-related information;
implicit indication information configured by the network, that is, the network configures a second threshold or a third threshold, and when the UE receives the second threshold or the third threshold sent by the network, it means that when the L1L2 mobility command is received, the timer T310 of the source cell is turned on and the timing duration exceeds the second threshold or the timer T312 of the source cell is turned on and the timing duration exceeds the third threshold, the UE has a critical failure, and records the L1L2 mobility-related information;
explicit indication information configured by the network indicating that after completing the L1L2 mobility command, a timer T310 of a target cell is turned on and a timing duration exceeds a fourth threshold or a timer T312 of the target cell is turned on and a timing duration exceeds a fifth threshold, the UE has a critical failure, and records the L1L2 mobility-related information;
implicit indication information configured by the network, i.e., the network configures a fourth threshold or a fifth threshold, and when the UE receives the fourth threshold or the fifth threshold sent by the network, it means that after completing the L1L2 mobility command, the timer T310 of the target cell has been started and a timing duration exceeds the fourth threshold or the timer T312 of the target cell has been started and the timing duration exceeds the fifth threshold, the UE has a critical failure, and records the L1L2 mobility-related information;
explicit indication information configured by the network indicating that when a duration of staying in a target TRP, target beam and/or target cell is less than a sixth threshold, the UE has a critical failure, and records the L1L2 mobility-related information;
implicit indication information configured by the network, that is, the network configures a sixth threshold, and when the UE receives the sixth threshold sent by the network, it indicates that when a duration of staying in a target TRP, target beam and/or target cell is less than a sixth threshold, the UE has a critical failure, and records the L1L2 mobility-related information;
explicit indication information configured by the network indicating that when a connected TRP, beam and/or cell undergoes frequent ping-pong switching, the UE has a critical failure, and records the L1L2 mobility-related information.

In the embodiment of the present disclosure, the L1L2 mobility-related information includes one or more of the following: 1) cell, beam and/or TRP information; 2) time information; or, 3) first information other than the cell, beam and/or TRP information and time information.

The cell, beam and/or TRP information includes one or more of the following: 1) identifier information of a source TRP, source beam, target TRP and/or target beam; 2) measurement result information of a source TRP, source beam, target TRP and/or target beam; 3) measurement configuration information of a configured TRP and/or beam; 4) measurement result information of TRP and/or beam; 5) identifier information of TRP and/or beam recovered after failure; 6) measurement result information of TRP and/or beam recovered after failure; 7) pre-configured candidate cell configuration information; 8) identifier information of a source cell and a target cell; 9) measurement result information of a source cell and a target cell; 10) measurement result information of a candidate cell; 11) identifier information of a cell recovered and/or reestablished after failure; or, 12) measurement result information of a cell recovered and/or reestablished after failure.

In the embodiment of the present disclosure, the time information includes one or more of the following: 1) a time length from execution of the L1L2 mobility command to failure of the L1L2 mobility; 2) a time length from receiving the L1L2 mobility configuration information to RLF and/or beam failure; 3) a time length from receiving the L1L2 mobility configuration information to execution of the L1L2 mobility command; 4) a time length from receiving the L1L2 mobility configuration information to execution of other mobility command, where the other mobility command refers to mobility commands other than the L1L2 mobility commands; 5) a time length from receiving the L1L2 mobility configuration information to failure of execution of other mobility command; 6) duration when RLF occurs in a target cell from receiving L1L2 mobility configuration information to successful execution of other mobility command; 7) beam application time configured by the network equipment; 8) execution time of the L1L2 mobility command configured by the network equipment; 9) duration when a timer is turned on from receiving the L1L2 mobility command or L1L2 mobility configuration information to the beam application time; 10) duration when a timer expires from receiving the L1L2 mobility command or L1L2 mobility configuration information to the beam application time; 11) user plane data interruption time; 12) duration when RLF occurs in the target cell from execution of the L1L2 mobility command to success of execution of the L1L2; or, 13) duration when RLF occurs in the target cell from receiving the L1L2 mobility configuration information to success of execution of the L1L2.

In this way, diversified time information can be obtained. The "failure of the L1L2 mobility" in 1) above may include two situations: one is TRP or beam switching failure, and the other is cell switching failure, but it is not limited to this. The "duration when RLF occurs in a target cell" in 7) above may be a duration when RLF occurs within a third duration of staying in the target cell", but is not limited to this.

In the embodiment of the present disclosure, the first information includes one or more of the following: 1) indication information of whether to fall back to a source TRP and/or source cell; 2) random access (RACH) related information; 3) timing advance (TA) related information; 4) mobility failure type indication information; 5) mobility failure cause; 6) pre-configured candidate cell uplink resource configuration information; 7) pre-configured candidate cell execution condition information; 8) indication information on whether to perform a RACH procedure or a RACH-less procedure; or, 9) trigger reason, which is used to indicate a reason for triggering critical failure.

In this way, more L1L2 mobility-related information can be obtained. The "indication information" in 1) above may be indication information in the case of L1L2 mobility failure, and the indication information indicates that when the UE fails to perform L1L2 mobility, the UE falls back to the source TRP and/or the source cell and continues to maintain connection with the source TRP and/or the source cell. The "RACH related information" in 2) above may refer to RACH related information in the L1L2 mobility procedure and/or RACH related information configured by the network. The "TA related information" in the 3) above may refer to TA related information preconfigured by the network and/or TA information carried in the L1L2 mobility command. The "mobility failure type indication information" in the above 4) may indicate that this failure is an L1L2 mobility failure. The "mobility failure cause" in 5) above may be a reason for the L1L2 mobility failure, such as TRP and/or beam switching failure, application target cell configuration failure, etc. The "preconfigured candidate cell uplink resource configuration information" in 6) above may be candidate cell uplink resource configuration information pre-configured by the network for the UE to perform RACH-less L1L2 mobility. The "preconfigured candidate cell execution condition information" in 7) above may be candidate cell execution condition information preconfigured by the network. The "indication information" in the 8) above is used to indicate whether the L1L2 mobility performed by the UE this time is based on RACH or RACH-less. The "triggering reason" in the 9) above is mainly is mainly for recording in the case of critical failure, recording the L1L2 mobility-related information that the UE is triggered to record due to which critical failure situation, such as an indication information indicating that the L1L2 mobility critical failure related information is recorded this time because a timing duration of an L1L2 mobility-related timer exceeds a first threshold, but is not limited to this.

In the embodiment of the present disclosure, the L1L2 mobility-related information is recorded in at least one new report and/or in at least one defined report.

In this way, the L1L2 mobility-related information can be recorded in a variety of ways. "the L1L2 mobility-related information is recorded in at least one new report and/or in at least one defined report" indicates that the UE can record the L1L2 mobility-related information in a new report or a defined report. The defined report may include: radio link failure (RLF) report, successful handover report (SHR), random access (RACH) report, connection establishment failure (CEF) report, etc. Specifically, for example, the L1L2 mobility-related information recorded in the critical failure scenario in this solution can be recorded in a newly defined report or in an existing SHR report. In addition, the L1L2 mobility-related information recorded by the UE in this solution can be recorded in one report, or in different reports. For example, the L1L2 mobility-related information recorded in the critical failure scenario in this solution can be recorded in the SHR report, and other L1L2 mobility-related information can be recorded in the RLF report.

Further, before receiving the L1L2 mobility-related information sent by the UE, the method further includes: receiving notification information sent by the UE in the first manner; where the notification information is used to indicate that the UE stores the L1L2 mobility-related information, and the first manner includes one or more of the following: carrying an indication of availability of the L1L2 mobility-related information in an uplink radio resource control (RRC) message; or using L1L2 signaling indication.

In this way, the network equipment can be notified in various ways: the UE stores the L1L2 mobility-related information. "using L1L2 signaling indication" includes: using L2 signaling indication, where the L2 signaling indication can be a Media Access Control Control Element (MAC CE) mode indication; using L1 signaling indication, where the L1 signaling indication can be a downlink control information (DCI) indication, or a combination of the above two modes; but the present disclosure is not limited thereto.

In the embodiment of the present disclosure, before receiving the L1L2 mobility-related information sent by the UE, the method further includes: sending an obtaining request for the L1L2 mobility-related information to the UE through a first message; where the first message includes one or more of the following: UE information request message; or, new message.

This can support transmission of L1L2 mobility-related information according to requirements of the network equipment.

In the embodiment of the present disclosure, the receiving the L1L2 mobility-related information sent by the UE, includes: receiving the L1L2 mobility-related information sent by the UE through a second message; where the second message includes one or more of the following: UE information response message; or new message.

In this way, L1L2 mobility-related information can be received in a diverse manner.

In this embodiment of the present disclosure, the performing corresponding L1L2 mobility optimization based on the L1L2 mobility-related information includes one or more of the following: sending the L1L2 mobility-related information to a first node through an interface message, thereby enabling the first node to send the L1L2 mobility-related information to a second node; where for a single-connectivity scenario, the first node includes a source node, and the second node includes a target node; or, the first node includes a target node, and the second node includes a source node; or,
for dual-connectivity scenario, the first node includes a source master node, and the second node includes a target primary node; or, the first node includes a target primary node, and the second node includes a source master node; or, the first node includes a target primary node, and the second node includes a target secondary node; or, the first node includes a target secondary node, and the second node includes a primary node; or,
for CU-DU separation scenario, the first node includes a centralized unit (CU) node, the second node includes a source distribution unit (DU) node and/or a target DU node; or the first node includes a source DU node, the second node includes a target DU node; or, the first node includes a target DU node, and the second node includes a source DU node.

This can realize transmission of L1L2 mobility-related information in multiple scenarios. Regarding "enabling the first node to send the L1L2 mobility-related information to the second node", for a single-connectivity scenario, for example, the source node sends L1L2 mobility-related information to the target node through an interface message; for a dual-connectivity scenario, for example, the source master node sends the L1L2 mobility-related information to the target primary node through interface message; for CU-DU separation scenario, for example, the CU node sends the L1L2 mobility-related information to the source DU node and/or the target DU node through interface message, which is not limited thereto.

The interface message used to transmit the L1L2 mobility-related information include one or more of the following: defined XN interface message between base stations; newly added XN interface message; defined NG interface message between the core network and the base station; newly added NG interface message; defined first frequency band F1 interface message; or newly added F1 interface message.

In this way, the L1L2 mobility-related information can be transmitted through diverse interface messages.

In the embodiment of the present disclosure, L1L2 mobility-related cells include: cell under single-connectivity; or a primary cell (PCell) of a primary cell group, a primary cell (PSCell) or secondary cell (SCell) of a secondary cell group under multi-connectivity.

This supports L1L2 mobility in various scenarios.

The information processing method provided in the embodiment of the present disclosure is illustrated hereinafter with an example.

In view the above technical problems, one embodiment of the present disclosure provides an information processing method, which can be specifically implemented as an L1L2 mobility optimization method, mainly involving: when the UE (terminal) receives L1L2 mobility configuration information sent by the network (equipment), under some conditions, the UE records L1L2 mobility-related information (corresponding to the above recording L1L2 mobility-related information when determining that the recording condition is met), and reports it to the network side (i.e., network equipment); after the network side receives the L1L2 mobility-related information sent by the UE, the network side performs corresponding L1L2 mobility optimization (corresponding to the above corresponding L1L2 mobility optimization according to the L1L2 mobility-related information).

Specifically, this solution involves the following:
(1) the UE receives the L1L2 mobility configuration information sent by the network. Under some conditions (corresponding to the above recording condition), the UE records the L1L2 mobility-related information and reports it to the network side; after the network side receives the L1L2 mobility-related information sent by the UE, the network side performs corresponding L1L2 mobility optimization.
(2) according to (1), the UE records L1L2 mobility-related information under some conditions, the condition mainly includes one or more of the following conditions (but are not limited to the following conditions):
   1) the UE does not receive the L1L2 mobility command sent by the network, and the UE has RLF in the source cell;
   2) the UE does not receive the L1L2 mobility command sent by the network, and the UE experiences beam failure in a source TRP and/or (source) beam;
   3) the UE receives the L1L2 mobility command sent by the network and executes the L1L2 mobility command, but fails to access a target TRP and/or (target) beam;
   4) the UE receives the L1L2 mobility command sent by the network and executes the L1L2 mobility command, but fails to access the target cell;
   5) the UE receives the L1L2 mobility command sent by the network and executes the L1L2 mobility command; the UE successfully executes the L1L2 mobility command, but soon has a beam failure occurring at the target TRP and/or (target) beam;
   6) the UE receives the L1L2 mobility command sent by the network and executes the L1L2 mobility command; the UE executes the L1L2 mobility command successfully, but has an RLF occurring in the target cell soon;
   7) the UE does not receive the L1L2 mobility command sent by the network, and the UE receives other mobility commands, such as legacy HO command (legacy handover command, such as L3 handover command), legacy PSCell change (legacy secondary cell group primary cell change) command, SCell (secondary cell) add, delete and/or update commands, etc., but the execution of other mobility commands fails, succeeds, or succeeds but critical failure occurs (that is, critical failure occurs); or
   8) the UE receives the L1L2 mobility command sent by the network and executes the L1L2 mobility command; the UE successfully executes L1L2 mobility, but a critical failure occurs during the L1L2 mobility procedure;
(3) According to (2), critical failure conditions (corresponding to the above critical failure) include one or more of the following situations:
   1) the L1L2 mobility-related timer exceeds a threshold, corresponding to the timing duration of the above L1L2 mobility-related timer exceeding the first threshold;
   2) when receiving the L1L2 mobility command, the UE turns on T310 or T312 in a source cell, and T310 or T312 exceeds a threshold; corresponding to the above reception of the L1L2 mobility command, the timer T310 of the source cell is turned on and the timing exceeds a second threshold or the timer T312 of the source cell is turned on and the timing exceeds the third threshold;
   3) after completing the L1L2 mobility command, the UE turns on T310 or T312 in a target cell, and T310 or T312 exceeds a threshold; corresponding to the above completion of the L1L2 mobility command, the timer T310 of the target cell is turned on and the timing exceeds the fourth threshold or the timer T312 of the target cell is turned on and the timing exceeds the fifth threshold;
   4) a duration of staying at the target TRP, target beam and/or target cell is very short, and the time length is less than a threshold; corresponding to the above a duration of staying at the target TRP, target beam and/or target cell is less than a sixth threshold; or
   5) frequent ping-pong handover occurs in TRP, beam and/or cell; corresponding to the above frequent ping-pong handover of connected TRP, beam and/or cell.
(4) according to (1), the L1L2 mobility-related information recorded by the UE mainly includes one or more of the following information:
   1) cell, beam and/or TRP information;
   2) time information; or,
   3) other information (information other than cell, beam and/or TRP information, and time information); corresponding to the above first information.
(5) According to (4), the cell, beam and/or TRP information includes one or more of the following information:
   1) identifier information of source TRP and/or beam, and/or, target TRP and/or beam (i.e., source TRP identifier information, source beam identifier information, target TRP identifier information, and/or target beam identifier information); identifier information corresponding to the above source TRP, source beam, target TRP and/or target beam;
   2) measurement result information of source TRP and/or beam, and/or, target TRP and/or beam (i.e., measurement result information of source TRP, measurement result information of source beam, measurement result information of target TRP and/or measurement result information of target beam); measurement result information corresponding to the above source TRP, source beam, target TRP and/or target beam;
   3) measurement configuration information of configured TRP and/or beam;
   4) measurement result information of each TRP and/or beam;
   5) identifier information of TRP and/or beam recovered after failure;
   6) measurement result information of TRP and/or beam recovered after failure;
   7) preconfigured configuration information of each candidate cell;
   8) identifier information of source cell and target cell;
   9) measurement result information of source cell and target cell;
   10) measurement result information of each candidate cell;
   11) identifier information of cell recovered and/or re-established after failure; or,
   12) measurement result information of cell recovered and/or re-established after failure.
(6) according to (4), the time information includes one or more of the following information:
   1) the time (length) from execution of L1L2 mobility command to L1L2 mobility failure;
   2) the time (length) from receiving L1L2 mobility configuration information to RLF and/or beam failure;
   3) the time (length) from receiving L1L2 mobility configuration information to execution of L1L2 mobility command;
   4) the time length from receiving L1L2 mobility configuration information to executing other mobility commands (mobility commands other than L1L2, such as L3 mobility command);
   5) the time length from receiving L1L2 mobility configuration information to failure to execute other mobility commands;
   6) the time (length) for RLF occurring in the target cell within a short period of time from receiving the L1L2 mobility configuration information to successfully executing other mobility commands;
   7) beam application time (beamAPPTime) configured by the network;
   8) L1L2 mobility command execution time configured by the network;
   9) the time (length) from receiving the L1L2 mobility command and/or L1L2 mobility configuration information to start of beamAPPTime (timer);
   10) the time (length) from receiving the L1L2 mobility command and/or L1L2 mobility configuration information to timeout of beamAPPTime (timer);
   11) user plane data interruption time;
   12) the time length for RLF occurring in the target cell from execution of the L1L2 mobility command to the successful execution of L1L2; or
   13) the time length of RLF occurring in the target cell from receiving L1L2 mobility configuration information to successful execution of L1L2.
(7) according to (4), the other information includes one or more of the following information:
   1) indication information of whether to fallback back to source TRP and/or source cell;
   2) random access (RACH) related information (if any);
   3) timing advance (TA) related information;
   4) (mobility) failure type indication information;
   5) (mobility) failure cause (reason);
   6) preconfigured uplink resource configuration information of each candidate cell;
   7) preconfigured execution condition information of each candidate cell;
   8) indication information of whether to perform RACH and/or RACH-less (no random access) procedures; or
   9) trigger cause, which is used to indicate cause of triggering critical failure.
(8) according to (3), one or more of the following information can be configured in advance:
   1) trigger condition indication information (corresponding to the above situations included in critical failure); or
   2) threshold information (at least one threshold involved in (3));
   Corresponding to the above, before recording L1L2 mobility-related information, receiving threshold information and/or trigger condition indication information sent by the network equipment.
(9) according to (1), L1L2 mobility-related information recorded by the UE may be recorded in one or more of the following reports:
   1) in a new report; corresponding to the above newly added report; or
   2) in an existing report; corresponding to the above defined report.
(10) according to (1), the UE can notify the network that L1L2 mobility-related information is stored (in UE) in one or more of the following ways (corresponding to the above first manner):
   1) reporting an availability indication to the network in an uplink RRC message; or,
   2) indicating to the network through L1L2 signaling.
(11) according to (1), the network may request the UE to report L1L2 mobility-related information through a UE information request message and/or a newly introduced message (corresponding to the above first message).
(12) according to (1), the UE may report L1L2 mobility-related information through the UE information response message and/or the newly introduced message (corresponding to the above second message).
(13) according to (1), after the network side receives the L1L2 mobility-related information sent by the UE, the network side performs corresponding L1L2 mobility optimization. This optimization may include one or more of the following:
   1) the network obtains L1L2 mobility-related information and sends it to a source or target node through an interface message;
   2) the source node sends the above L1L2 mobility-related information to the target node through an interface message; or
   3) the target node sends the above L1L2 mobility-related information to the source node through an interface message.

The transmission of L1L2 mobility-related information between the above nodes may involve an XN (between base stations) or NG (between core network and base station) interface, and existing XN interface message (such as access and mobility indication) or NG interface message (such as downlink and/or uplink RAN configuration transmission (RAN configuration transfer)) can be used, and newly added message can also be used.

In addition, multi-connectivity scenario may also include one or more of the following network behaviors:
1) the network obtains L1L2 mobility-related information and sends it to a source master node (MN) or target MN through an interface message;
2) the source MN sends the above L1L2 mobility-related information to the target MN through an interface message;
3) the target MN sends the above L1L2 mobility-related information to the source MN through an interface message;
4) the target MN sends the above L1L2 mobility-related information to the target secondary node (SN) through an interface message; or
5) the target SN sends the above L1L2 mobility-related information to the MN through an interface message.

The above transmission of L1L2 mobility-related information between MNs may involve XN or NG interfaces, and existing XN interface message (such as access and mobility indication) or NG interface messages (such as downlink and/or uplink RAN configuration transfer) can be used, or newly added message can be used.

The above transmission of L1L2 mobility-related information between the MN and SN nodes may involve the XN interface, and existing XN interface messages can be used, such as SCG failure information report, and/or SCG failure transfer message, or newly added message can be used.

In addition, in the CU-DU separation scenario, one or more of the following network behaviors may also be included:
1) the network obtains L1L2 mobility-related information and sends it to the source and/or target CU and/or DU (i.e., source CU, source DU, target CU and/or target DU) through an interface message;
2) the CU sends L1L2 mobility-related information to the source DU and/or target DU respectively;
3) the source DU sends L1L2 mobility-related information to the target DU through the CU; or
4) the target DU sends L1L2 mobility-related information to the source DU through the CU.

The information between CU-DU can be transmitted through F1 (frequency band 1) interface, and the existing F1 interface message can also be used, or new F1 interface message can also be used.

The above (13) corresponds to the above sending the L1L2 mobility-related information to the first node through interface message, thereby enabling the first node to send the L1L2 mobility-related information to the second node. The "interface message" corresponds to the above interface message used to transmit the L1L2 mobility-related information.

It is explained here:
1) The above reported L1L2 mobility-related information can be stored in the same report, or reported in different reports;
2) the above involved cells may include: cell under single-connectivity; or "PCell (a primary cell of a primary cell group)", "PSCell (a primary cell of a secondary cell group" or "SCell (a secondary cellof a secondary cell group) under multi-connectivity. L1L2 mobility-related cells include: cell under single-connectivity; or a primary cell (PCell) of a primary cell group, a primary cell (PSCell) or secondary cell (SCell) of a secondary cell group under multi-connectivity.

The solutions provided in the embodiments of the present disclosure will be specifically illustrated with examples.

Example 1: the UE does not receive the L1L2 mobility command sent by the network, and the UE experiences RLF and/or beam failure in the source cell, source TRP and/or source beam.

The UE receives the L1L2 mobility configuration information sent by the network, but the UE does not receive the L1L2 mobility command sent by the network. If the UE experiences RLF or beam failure in the source cell, source TRP and/or source beam, the UE will record one of the following information:
1) measurement configuration information of configured TRP and/or beam; mainly including synchronization signal block SSB measurement related information, such as measurement period, etc.;
2) measurement result information of each TRP and/or beam, which can include the latest measurement result information of each candidate TRP and/or beam, and a measurement parameter can be reference signal received power (RSRP), reference signal received quality (RSRQ) or Signal to Interference plus Noise Ratio (SINR, i.e., signal-to-noise ratio);
3) identifier information of TRP and/or beam restored after failure; when RLF occurs and the UE selects a beam and/or TRP to re-access successfully, the UE will record the identifier information of the restored TRP and/or beam. For example, the UE can record a physical cell identifier (PCI) or PCI index corresponding to the recovered TRP and/or beam;
4) measurement result information of TRP and/or beam restored after failure; when RLF occurs and the UE selects a beam and/or TRP to re-access successfully, the UE will record measurement result information of the restored TRP and/or beam, and the measurement parameter can Reference Signal Received Power (RSRP), Reference Signal Received Quality (RSRQ) or Signal to Interference plus Noise Ratio (SINR), etc.;
5) preconfigured configuration information of each candidate cell; in the L1L2 mobility with serving cell change scenario, the network will configure the configuration information of each candidate cell in advance for the UE, which may include some configuration information required for cell changes of L1, L2 and/or L3; the UE can record and report this information;
6) measurement result information of each candidate cell, which may include the latest measurement result information of each candidate cell, and may include cell-level measurement result and/or beam-level measurement result, and the measured parameter can be RSRP, RSRQ or SINR, etc.;
7) identifier information of cell recovered and/or re-established after failure; when RLF occurs and the UE selects a cell to re-access successfully, the UE will record identifier information of the restored cell, such as recording PCI and frequency or Cell Global Identifier (CGI);
8) measurement result information of Cell recovered and/or re-established after failure; when RLF occurs and the UE selects a cell to re-access successfully, the UE will record measurement result information of the restored cell, which may include cell-level measurement result and/or beam-level measurement results, and the measured parameter can be RSRP, RSRQ or SINR, etc.;
9) the duration from receiving L1L2 mobility configuration information to RLF and/or beam failure;
10) preconfigured uplink resource configuration information of each candidate cell; this uplink resource configuration information may include uplink grant (UL grant) information and other uplink resource configuration information required for the UE to perform a RACH-less cell change;
11) preconfigured execution condition information of each candidate cell; if L1L2 mobility can be conditionally configured, when the UE evaluates that the execution condition is met to perform L1L2 mobility, similar to conditional handover (CHO), then the UE can record the preconfigured execution condition information of each candidate cell.

There are two ways for the UE to record L1L2 mobility-related information. One way is that the UE can record it in a new report and introduce a new report to record the L1L2 mobility-related information. Another way is that the UE can record it in existing reports, such as RLF report, CEF report, SHR, etc. The above information can be recorded in one report at the same time or in different reports. If recorded in different reports, the UE can send available indications respectively, and the network and UE can also obtain and report them respectively.

When the UE successfully accesses a beam, TRP and/or cell, the UE can directly report the recorded L1L2 mobility-related information or first report an available indication to the network to notify the network that the UE stores L1L2 mobility-related information and is waiting for the network to obtain. If the UE reports an available indication to the network, the UE can report the available indication in two ways. One way is that the UE reports it to the network in the uplink completion message. For example, when the UE successfully performs L1L2 mobility, the UE sends an RRC reconfiguration completion message to the network, and an available indication can be reported in the RRC reconfiguration completion message; or in subsequent uplink completion messages, such as RRC connection establishment completion message, RRC connection recovery completion message, RRC re-establishment completion message, other uplink messages and/or new uplink messages. The second way is that the UE notifies the network side through the L1L2 command that the UE stores L1L2 mobility-related information. When the network side receives the L1L2 command sent by the UE, the bottom layer of the network side notifies the upper layer of this information. The higher layer on the network side can send RRC signaling to the UE to obtain this information.

If the network receives the available indication information sent by the UE, the network can send a UE information request message to request the UE to report this L1L2 mobility-related information, and the UE can send a UE information response message to send L1L2 mobility-related information to the network. In addition, the network can also send a new request message to request the UE to report the L1L2 mobility-related information, and the UE can send a new response message to send the L1L2 mobility-related information to the network.

When the network receives the L1L2 mobility-related information sent by the UE, the network performs corresponding optimization. Another situation is when the network receives L1L2 mobility-related information sent by the UE, the current node is not necessarily the mobility source (network node) or target network node where the problem occurred, and the current L1L2 mobility-related information needs to be sent to the mobility source or target network node, the transmission of L1L2 mobility-related information between nodes may involve the XN or NG interface. The existing XN interface message (such as access and mobility indication) or NG interface message (such as downlink and/or uplink RAN configuration transfer) can be used, or a new message can also be added. If the mobility source network node analyzes L1L2 mobility-related information, it may also need to notify the mobility target network node for optimization; similarly, if the mobility target network node analyzes the L1L2 mobility-related information, it may also need to notify the mobility source network node for optimization, and transmission of the L1L2 mobility-related information between the source and target network nodes may involve the XN or NG interface. The existing XN interface message (such as access and mobility indication) or NG interface message (such as downlink and/or uplink RAN configuration transfer) can be used, or a new message can be added.

In a multi-connectivity scenario, the network node can first send L1L2 mobility-related information to the source MN and/or target MN node during L1L2 mobility. The MN node sends the L1L2 mobility-related information to the SN node. If the SN node analyzes the L1L2 mobility-related information and considers that the MN node needs to be optimized, it can also send the L1L2 mobility-related information to the MN node or notify the MN node (i.e. the aforementioned MN node). The transmission of L1L2 mobility-related information and other related information between the MN and the SN node may involve the XN interface, and the existing XN interface messages (such as SCG failure information report and/or SCG failure transfer messages) can be used, or new messages can be added.

In a CU-DU separation scenario, after the network obtains L1L2 mobility-related information, the network can send it to the source and/or target CU and/or DU through an interface message. When sent to the CU, the CU sends the L1L2 mobility-related information to the source DU and/or the target DU respectively. When sent to the source DU, the source DU sends L1L2 mobility-related information to the target DU through the CU. When sent to the target DU, the target DU sends L1L2 mobility-related information to the source DU through the CU. The information between CU-DU can be transmitted through the F1 interface, and existing F1 interface message can be used, or new F1 interface message can be used.

Example 2: the UE receives the L1L2 mobility command sent by the network and executes the L1L2 mobility command, but fails to access the target cell, TRP and/or beam (i.e. the target cell, target TRP and/or target beam).

The UE receives the L1L2 mobility configuration information sent by the network. The UE receives the L1L2 mobility command sent by the network, that is, the network instructs the UE to perform L1L2 mobility, and notifies the UE of the corresponding target cell, TRP, and/or beam (i.e., the target cell, target TRP, and/or target beam). The UE executes the L1L2 mobility command, but the UE fails to execute the L1L2 mobility command, that is, the UE fails to access the target cell, TRP, and/or beam. The failure of the UE to access the target cell may be due to failure of the UE to perform beam and/or TRP changes, or failure of the UE to apply pre-configuration. The failure of the UE to access the target TRP and/or target beam may be due to the failure of the UE to perform beam and/or TRP changes. When the UE fails to access the target cell, TRP and/or beam, the UE will record one or more of the following information:
1) identifier information of source TRP and/or beam, and/or target TRP and/or beam; for example, the UE can record PCI or PCI index corresponding to the source TRP and/or beam, and/or the target TRP and/or beam;
2) measurement result information of source TRP and/or beam, and/or target TRP and/or beam; the measurement parameter can be RSRP, RSRQ or SINR, etc.;
3) configured measurement configuration information of TRP and/or beam, mainly including SSB measurement related information, such as measurement period, etc.;
4) measurement result information of each TRP and/or beam, including the latest measurement result information of each candidate TRP and/or beam, and the measurement parameter may be RSRP, RSRQ or SINR, etc.;
5) identifier information of TRP and/or beam restored after failure; when the beam and/or TRP change fails and the UE selects a beam and/or TRP to re-access successfully, the UE will record identifier information of the restored TRP and/or beam; for example, the UE can record its corresponding PCI or PCI index;
6) measurement result information of TRP and/or beam restored after failure; when the beam and/or TRP change fails and the UE selects a beam and/or TRP to re-access successfully, the UE will record beam measurement result information of the restored TRP and/or beam, and measured parameter can be RSRP, RSRQ or SINR, etc.;
7) preconfigured configuration information of each candidate cell; in the L1L2 mobility with serving cell change scenario, the network will configure the configuration information of each candidate cell in advance for the UE, which may include configuration information required for some cell changes of L1, L2 and/or L3, and the UE can record and report this information;
8) identifier information of source cell and target cell; in the L1L2 mobility with serving cell change scenario, the UE can record identifier information of the source cell and target cell, for example, recording PCI and frequency, or recording CGI;
9) measurement result information of source cell and target cell; in the L1L2 mobility with serving cell change scenario, the UE can record measurement result information of source cell and target cell, which may include cell-level measurement result and/or beam-level measurement result, and measured parameter can be RSRP, RSRQ or SINR, etc.;
10) measurement result information of each candidate cell, including the latest measurement result information of each candidate cell, which may include cell-level measurement result and/or beam-level measurement results; and measured parameter can be RSRP, RSRQ or SINR, etc.;
11) identifier information of cell restored and/or re-etablished after failure; when the cell change fails and the UE selects a cell to re-access successfully, the UE will record identifier information of the restored cell, for example, recording PCI and frequency, or record CGI;
12) measurement result information of cell restored and/or re-established after failure; when the cell change fails and the UE selects a cell to re-access successfully, the UE will record measurement result information of the restored cell, which may include cell-level measurement result and/or beam-level measurement result, and measured parameter can be RSRP, RSRQ or SINR, etc.;
13) duration from execution of L1L2 mobility command to L1L2 mobility failure;
14) duration from receiving L1L2 mobility configuration information to execution of L1L2 mobility command;
15) beam application time (beamAPPTime) configure d by the network; beamAPPTime is the beam application time configure d by the network, that is, when the UE receives the L1L2 mobility command, the UE will not execute it immediately, instead, the UE starts the beamAPPTime (timer) after the Hybrid Automatic Repeat reQuest (HARQ) feedback, and executes the L1L2 mobility command after the beamAPPTime times out;
16) the L1L2 mobility command execution time configure d by the network; similar to T304, the network may configure an L1L2 mobility command execution time for the UE. When this time times out, the UE fails to execute the L1L2 mobility command. This time can be used to control the beam and/or TRP changes, and can also be used to control cell changes. Beam, TRP and/or cell changes can share the same time or use different times;
17) duration from receiving the L1L2 mobility command and/or L1L2 mobility configuration information to starting beamAPPTime;
18) duration from receiving L1L2 mobility command and/or L1L2 mobility configuration information to beamAPPTime timeout;
19) user plane data interruption time; when the UE performs beam change, TRP change and/or cell change, what is the user plane interruption delay? For example, the UE can calculate a time interval between the last data packet received from the source beam, TRP and/or cell (i.e., source beam, source TRP and/or source cell) and the first data packet received from the target beam, TRP and/or cell (i.e., target beam, target TRP and/or target cell);
20) indication information of whether to fall back to the source TRP and/or source cell; this indication information is used to indicate whether the UE has fallen back to the source TRP and/or source cell when the beam, TRP and/or cell change fails; this indication information can be a Boolean type, that is, true or false (false); if it is true, it means that after the UE experience the beam, TRP and/or cell change failure, the UE fallback back to the source TRP and/or source cell. If it is false, it means that after the UE experience the beam, TRP and/or cell change failure, the UE does not fall back to the source TRP and/or source cell. This indication information can also be an enumeration type; when this indication information exists, it means that after the UE experience the beam, TRP and/or cell change failure, the UE falls back to the source TRP and/or source cell; when this indication information is missing, it means that after the UE experience the beam, TRP and/or cell change failure, the UE does not fall back to the source TRP and/or source cell, or vice versa;
21) RACH related information (if any); during the cell change process, the UE may perform the RACH process to access the target cell. When access to the target cell fails, the UE can record the relevant information in the RACH process, for example, RACH resource information used, etc.;
22) TA related information; the UE can record the TA value information of each candidate cell and/or target cell that is preconfigured and/or sent by the network;
23) failure type indication information; this type indication information may indicate that the UE fails to perform L1L2 mobility; in more detail, this indication information may indicate that L1L2 beam and/or TRP mobility fails, or L1L2 cell mobility fails, or both; L1L2 cell mobility failure may also include L1L2 beam and/or TRP mobility failure;
24) failure cause; this failure cause can indicate whether the failure is due to L1L2 beam and/or TRP mobility failure, or due to UE application pre-configuration failure, which is mainly for L1L2 cell change failure scenario;
25) preconfigured uplink resource configuration information of each candidate cell; this uplink resource configuration information may include UL grant information and other uplink resource configuration information required for the UE to perform a RACH-less cell change;
26) preconfigured execution condition information of each candidate cell; if L1L2 mobility can be conditionally configured, when the UE evaluates that the execution condition is met to perform L1L2 mobility, similar to CHO, then the UE can record the preconfigured execution condition information of each candidate cell; or
27) indication information of whether to perform RACH and/or RACH-less procedure; this indication information is used to instruct the UE to use RACH mode to access the target beam, TRP and/or cell (i.e. target beam, target TRP and/or target cell) or use RACH-less mode to access the target beam, TRP and/or cell. This indication can be a Boolean type, that is, true or false; if it is true, it means that the UE uses RACH mode to access the target beam, TRP and/or cell; if it is false, it means that the UE uses RACH-less mode to access the target beam, TRP and/or cell. This indication information can also be enumeration type; when this indication information exists, it means that the UE uses RACH mode to access the target beam, TRP and/or cell; when this indication is absent, it means that the UE uses RACH-less mode to access the target beam, TRP and/or cell, or vice versa.

The recording and reporting methods of the above information are the same as those in Example 1, and will not be described again here.

Example 3: the UE receives the L1L2 mobility command sent by the network and executes the L1L2 mobility command; the UE successfully executes the L1L2 mobility command, but soon RLF and/or beam failure occurs in the target cell, TRP and/or beam.

The UE receives the L1L2 mobility configuration information sent by the network. The UE receives the L1L2 mobility command sent by the network, that is, the network instructs the UE to perform L1L2 mobility and notifies the UE of the corresponding target cell, TRP and/or beam. The UE executes the L1L2 mobility command successfully, but the UE soon experiences beam failure and/or RLF in the target beam, TRP, and/or cell. The UE records one or more of the following information:
1) identifier information of source TRP and/or beam, and/or target TRP and/or beam; for example, the UE can record PCI or PCI index corresponding to the source TRP and/or beam, and/or the target TRP and/or beam;
2) measurement result information of source TRP and/or beam, and/or target TRP and/or beam; the measurement parameter can be RSRP, RSRQ or SINR, etc.;
3) Configured measurement configuration information of TRP and/or beam, which mainly includes SSB measurement related information, such as measurement period, etc.;
4) measurement result information of each TRP and/or beam, which may include the latest measurement result information of each candidate TRP and/or beam, and the measurement quantity may be RSRP, RSRQ or SINR, etc.;
5) identifier information of TRP and/or beam restored after failure; when beam failure occurs, the UE selects a beam and/or TRP to re-access successfully, and the UE will record identifier information of the restored TRP and/or beam, for example, the UE can record its corresponding PCI or PCI index;
6) measurement result information of TRP and/or beam recovered after failure; when beam failure occurs, the UE selects a beam and/or TRP to re-access successfully, and the UE will record measurement result information of the recovered TRP and/or beam, and measurement parameter can be RSRP, RSRQ or SINR etc.;
7) preconfigured configuration information of each candidate cell; in the L1L2 mobility with serving cell change scenario, the network will configure the configuration information of each candidate cell in advance for the UE, which may include some configuration information required for cell changes of L1, L2 and/or L3, and the UE can record and report this information;
8) identifier information of source cell and target cell; in the L1L2 mobility with serving cell change scenario, the UE can record identifier information of the source cell and target cell, for example, the UE can record PCI and frequency, or record CGI;
9) measurement result information of source cell and target cell; in the L1L2 mobility with serving cell change scenario, the UE can record measurement result information of source cell and target cell, which may include cell-level measurement result and/or beam-level measurement result; and the measured parameter can be RSRP, RSRQ or SINR, etc.;
10) measurement result information of each candidate cell, which may include the latest measurement result information of each candidate cell, and may include cell-level measurement result and/or beam-level measurement results; and the measured parameter can be RSRP, RSRQ or SINR, etc.;
11) identifier information of cell recovered and/or re-established after failure; when RLF occurs and the UE selects a cell to re-access successfully, the UE will record identifier information of the restored cell, for example, the UE can record PCI and frequency, or record CGI;
12) measurement result information of cell recovered and/or re-stablished after failure; when RLF occurs and the UE selects a cell to re-access successfully, the UE will record measurement result information of the restored cell, which may include cell-level measurement result and/or beam-level measurement result, and the measurement parameter can be RSRP, RSRQ or SINR, etc.;
13) duration from receiving L1L2 mobility configuration information to execution of L1L2 mobility command;
14) beam application time (beamAPPTime) configure d by the network; beamAPPTime is the beam application time configure d by the network, that is, when the UE receives the L1L2 mobility command, the UE will not execute it immediately, instead, the UE starts the beamAPPTime (timer) after the Hybrid Automatic Repeat reQuest (HARQ) feedback, and executes the L1L2 mobility command after the beamAPPTime times out;
15) the L1L2 mobility command execution time configured by the network; similar to T304, the network may configure an L1L2 mobility command execution time for the UE. When this time times out, the UE fails to execute the L1L2 mobility command. This time can be used to control the beam and/or TRP change, and can also be used to control cell changes; beam, TRP and/or cell changes can share the same time or use different times;
16) duration from receiving the L1L2 mobility command and/or L1L2 mobility configuration information to starting beamAPPTime;
17) duration from receiving L1L2 mobility command and/or L1L2 mobility configuration information to beamAPPTime timeout;
18) user plane data interruption time; when the UE performs beam change, TRP change and/or cell change, what is the user plane interruption delay? For example, the UE can calculate a time interval between the last data packet received from the source beam, TRP and/or cell (i.e., source beam, source TRP and/or source cell) and the first data packet received from the target beam, TRP and/or cell (i.e., target beam, target TRP and/or target cell);
19) indication information of whether to fall back to the source TRP and/or source cell; this indication information is used to indicate whether the UE has fallen back to the source TRP and/or source cell when a beam failure and/or RLF occurs in the target beam, TRP and/or cell (i.e., target beam, target TRP and/or target cell); this indication information can be a Boolean type, that is, true or false; if it is true, it means that after the UE experience beam failure and/or RLF, the UE fallback back to the source TRP and/or source cell. If it is false, it means that after the UE experience beam failure and/or RLF, the UE does not fall back to the source TRP and/or source cell. This indication information can also be an enumeration type; when this indication information exists, it means that after the UE experiences beam failure and/or RLF, the UE falls back to the source TRP and/or source cell; when this indication information is absent, it means that after the UE experiences beam failure and/or RLF, the UE does not fall back to the source TRP and/or source cell, or vice versa;
20) RACH related information (if any); during the cell change process, the UE may perform the RACH process to access the target cell; when the access to the target cell is successful, but RLF occurs soon, the UE can record the relevant information in the RACH process, for example, RACH resource information used, etc.;
21) TA related information, the UE can record the TA value information of each candidate cell and/or target cell that is preconfigured and/or sent by the network;
22) preconfigured uplink resource configuration information of each candidate cell; this uplink resource configuration information may include UL grant information and other uplink resource configuration information required for the UE to perform RACH-less cell change;
23) preconfigured execution condition information of each candidate cell; if L1L2 mobility can be conditionally configured, when the UE evaluates that the execution condition is met to perform L1L2 mobility, similar to CHO, then the UE can record the preconfigured execution condition information of each candidate cell; or
24) indication information of whether to perform RACH and/or RACH-less procedures; this indication information is used to instruct the UE to use RACH mode to access the target beam, TRP and/or cell (i.e. target beam, target TRP and/or target cell) or use RACH-less mode to access the target beam, TRP and/or cell. This indication can be Boolean type, that is, true or false; if it is true, it means that the UE uses RACH mode to access the target beam, TRP and/or cell; if it is false, it means that the UE uses RACH-less mode to access the target beam, TRP and/or cell. This indication information can also be enumeration type.; when this indication information exists, it means that the UE uses RACH mode to access the target beam, TRP and/or cell; when this indication is absent, it means that the UE uses RACH-less mode to access the target beam, TRP and/or cell, or vice versa.

The recording and reporting methods of the above information are the same as those in Example 1, and will not be described again here.

Example 4: the UE does not receive the L1L2 mobility command sent by the network, but the UE receives other mobility commands.

The UE receives the L1L2 mobility configuration information sent by the network. The UE does not receive the L1L2 mobility command sent by the network. The UE received the legacy HO (handover) command, PSCell change command, SCell add and/or delete command, etc. The UE executes the legacy mobility command, but the execution of the legacy mobility command succeeds, the execution of the legacy mobility command fails, or the execution of the legacy mobility command fails critically. The UE may record one or more of the following information:
1) configured measurement configuration information of TRP and/or beam, which mainly including SSB measurement related information, such as measurement period, etc.;
2) measurement result information of each TRP and/or beam, which may include the latest measurement result information of each candidate TRP and/or beam, and the measurement parameter may be RSRP, RSRQ or SINR, etc.;
3) preconfigured configuration information of each candidate cell; in the L1L2 mobility with serving cell change scenario, the network will configure the configuration information of each candidate cell in advance for the UE, which may include configuration information required for some cell changes of L1, L2 and/or L3; and the UE can record and report this information;
4) measurement result information of each candidate cell, which may include the latest measurement result information of each candidate cell, and may include cell-level measurement result and/or beam-level measurement result; and the measured parameter can be RSRP, RSRQ or SINR, etc.;
5) duration from receiving L1L2 mobility configuration information to executing other mobility commands;
6) duration from receiving L1L2 mobility configuration information to failure to execute other mobility commands;
7) the time for RLF occurring in the target cell within a short period of time from receiving the L1L2 mobility configuration information to successfully executing other mobility commands;
8) beam application time (beamAPPTime) configure d by the network; beamAPPTime is the beam application time configure d by the network, that is, when the UE receives the L1L2 mobility command, the UE will not execute it immediately, instead, the UE starts the beamAPPTime (timer) after the Hybrid Automatic Repeat reQuest (HARQ) feedback, and executes the L1L2 mobility command after the beamAPPTime times out;
9) the L1L2 mobility command execution time configured by the network; similar to T304, the network may configure an L1L2 mobility command execution time for the UE; when this time times out, the UE fails to execute the L1L2 mobility command; this time can be used to control the beam and/or TRP change, and can also be used to control cell change; beam, TRP and/or cell change can share the same time or use different times;
10) TA related information, UE can record the TA value information of each candidate cell preconfigured by the network;
11) preconfigured uplink resource configuration information of each candidate cell; this uplink resource configuration information may include UL grant information and other uplink resource configuration information required for the UE to perform a RACH-less cell change; or
12) preconfigured execution condition information of each candidate cell; if L1L2 mobility can be conditionally configured, when the UE evaluates that the execution condition is met to perform L1L2 mobility, similar to CHO, then the UE can record the preconfigured execution condition information of each candidate cell.

The recording and reporting methods of the above information are the same as those in Example 1, and will not be described again here.

Example 5: the UE receives the L1L2 mobility command sent by the network and executes the L1L2 mobility command; the UE executes the L1L2 mobility successfully, but a critical failure occurs during the L1L2 mobility process.

The UE receives the L1L2 mobility configuration information sent by the network. The UE receives the L1L2 mobility command sent by the network, that is, the network instructs the UE to perform L1L2 mobility and notifies the UE of the corresponding target cell, TRP and/or beam. The UE executes the L1L2 mobility command successfully, but a critical failure occurs. The UE records successful L1L2 mobility-related information (that is, L1L2 mobility-related information when L1L2 mobility is performed successfully but a critical failure occurs), which mainly includes one or more of the following:
1) identifier information of source TRP and/or beam, and/or target TRP and/or beam; for example, the UE can record PCI or PCI index corresponding to the source TRP and/or beam, and/or the target TRP and/or beam;
2) measurement result information of source TRP and/or beam, and/or target TRP and/or beam; the measurement parameter can be RSRP, RSRQ or SINR, etc.;
3) configured measurement configuration information of TRP and/or beam, which mainly includes SSB measurement related information, such as measurement period, etc.;
4) measurement result information of each TRP and/or beam, which may include the latest measurement result information of each candidate TRP and/or beam, and the measurement parameter may be RSRP, RSRQ or SINR, etc.;
5) preconfigured configuration information of each candidate cell; in the L1L2 mobility with serving cell change scenario, the network will configure the configuration information of each candidate cell in advance for the UE, which may include configuration information required for some cell changes of L1, L2 and/or L3, and the UE can record and report this information;
6) identifier information of source cell and target cell; in the L1L2 mobility with serving cell change scenario, the UE can record identifier information of the source cell and target cell, for example, the UE can record PCI and frequency, or record CGI;
7) measurement result information of source cell and target cell; in the L1L2 mobility with serving cell change scenario, the UE can record measurement result information of source cell and target cell, which may include cell-level measurement result and/or beam-level measurement result; and the measured parameter can be RSRP, RSRQ or SINR, etc.;
8) measurement result information of each candidate cell, which may include the latest measurement result information of each candidate cell, and may include cell-level measurement result and/or beam-level measurement result; and the measured parameter can be RSRP, RSRQ or SINR, etc.;
9) duration from receiving L1L2 mobility configuration information to execution of L1L2 mobility command;
10) beam application time (beamAPPTime) configured by the network; beamAPPTime is the beam application time configured by the network, that is, when the UE receives the L1L2 mobility command, the UE will not execute it immediately, instead, the UE starts the beamAPPTime (timer) after the Hybrid Automatic Repeat reQuest (HARQ) feedback, and executes the L1L2 mobility command after the beamAPPTime times out;
11) the L1L2 mobility command execution time configured by the network; similar to T304, the network may configure an L1L2 mobility command execution time for the UE. When this time times out, the UE fails to execute the L1L2 mobility command. This time can be used to control the beam and/or TRP change, and can also be used to control cell changes; beam, TRP and/or cell changes can share the same time or use different times;
12) duration from receiving the L1L2 mobility command and/or L1L2 mobility configuration information to starting beamAPPTime;
13) duration from receiving L1L2 mobility command and/or L1L2 mobility configuration information to beamAPPTime timeout;
14) user plane data interruption time; when the UE performs beam change, TRP change and/or cell change, what is the user plane interruption delay; for example, the UE can calculate a time interval between the last data packet received from the source beam, TRP and/or cell (i.e., source beam, source TRP and/or source cell) and the first data packet received from the target beam, TRP and/or cell (i.e., target beam, target TRP and/or target cell);
15) RACH related information (if any); during the cell change process, the UE may perform the RACH process to access the target cell; when the access to the target cell is successful, but a critical failure occurs, such as because the L1L2 mobility time exceeds a threshold, the UE can record the relevant information in the RACH process, for example, RACH resource information used, etc.;
16) TA related information, the UE can record the TA value information of each candidate cell and/or target cell that is preconfigured and/or sent by the network;
17) preconfigured uplink resource configuration information of each candidate cell; this uplink resource configuration information may include UL grant information and other uplink resource configuration information required for the UE to perform RACH-less cell change;
18) preconfigured execution condition information of each candidate cell; if L1L2 mobility can be conditionally configured, when the UE evaluates that the execution condition is met to perform L1L2 mobility, similar to CHO, then the UE can record the preconfigured execution condition information of each candidate cell; or
19) indication information of whether to perform RACH and/or RACH-less procedures; this indication information is used to instruct the UE to use RACH mode to access the target beam, TRP and/or cell (i.e. target beam, target TRP and/or target cell) or use RACH-less mode to access the target beam, TRP and/or cell. This indication can be Boolean type, that is, true or false; if it is true, it means that the UE uses RACH mode to access the target beam, TRP and/or cell; if it is false, it means that the UE uses RACH-less mode to access the target beam, TRP and/or cell. This indication information can also be enumeration type.; when this indication information exists, it means that the UE uses RACH mode to access the target beam, TRP and/or cell; when this indication is absent, it means that the UE uses RACH-less mode to access the target beam, TRP and/or cell, or vice versa.
20) Triggering cause, which mainly includes one or more of the following:
   a) indication information indicating that the triggering cause for recording this successful L1L2 mobility-related information is that the L1L2 mobility-related timer exceeds a threshold; this L1L2 mobility-related timer can be similar to the T304 timer of legacy HO;
   b) indication information indicating that the triggering cause for recording this successful L1L2 mobility-related information is that when receiving the L1L2 mobility command, the UE turns on T310 in the source cell and T310 exceeds a threshold;
   c) indication information indicating that the triggering cause for recording this successful L1L2 mobility-related information is that when receiving the L1L2 mobility command, the UE turns on T312 in the source cell and T312 exceeds a threshold;
   d) indication information indicating that the triggering cause for recording this successful L1L2 mobility-related information is that after completing the L1L2 mobility command, the UE turns on T310 in the target cell and T310 exceeds a threshold;
   e) indication information indicating that the triggering cause for recording this successful L1L2 mobility-related information is that after completing the L1L2 mobility command, the UE turns on T312 in the target cell and T312 exceeds a threshold;
   f) indication information indicating that the triggering cause for recording this successful L1L2 mobility-related information is that the UE stays in the target TRP, target beam and/or target cell for a very short time, and the time length is less than a threshold; or
   g) indication information indicating that the triggering cause for recording this successful L1L2 mobility-related information is due to frequent ping-pong in TRP, beam and/or cell.

In addition, before the UE executes the L1L2 mobility command, the UE may receive configuration information for recording successful L1L2 mobility-related information. This configuration information mainly configures conditions for the UE to record successful L1L2 mobility-related information and its related thresholds (corresponding to the above (8) relevant information configured in advance), the details are as follows:
1) indication information indicating that when the L1L2 mobility-related timer exceeds a threshold (such as a threshold in the following 2), corresponding to the above first threshold), the UE records successful L1L2 mobility-related information; this L1L2 mobility-related timer can be similar to legacy HO's T304timer this indication information may be implicit indication information or explicit indication information;
2) configured threshold of L1L2 mobility-related timer; this threshold may be a specific value or a percentage value; this percentage value may be a ratio of an L1L2 mobility actual time to the network-configured L1L2 mobility time; "L1L2 mobility actual time" refers to actual time spent by the UE to perform L1L2 mobility; for example, the network configuration allows the UE to complete L1L2 mobility (handover) in 30ms, and the UE actually takes 20ms to complete L1L2 mobility (handover); then, the network configured L1L2 mobility time is 30ms, and the L1L2 mobility actual time is 20ms;
3) indication information indicating that when receiving the L1L2 mobility command, if the UE turns on T310 in the source cell and T310 exceeds a threshold (such as the T310 threshold in the following 4), corresponding to the above second threshold), the UE records successful L1L2 mobility-related information;
4) configured T310 threshold, this threshold may be a specific value or a percentage value; this percentage value may be a ratio of the time when the UE turns on T310 in the source cell to the T310 value configured by the network when the UE receives the L1L2 mobility command; the "time when the UE turns on T310 in the source cell" means that when the UE receives the L1L2 mobility command, the UE may have already turned on the T310 timer in the source cell, and this timer has been running for a period of time, and the running time is the time (length) when the UE turns on the T310 in the source cell;
5) indication information indicating that when receiving the L1L2 mobility command, if the UE turns on T312 in the source cell and T312 exceeds a threshold (such as the following T312 threshold in 6), corresponding to the third threshold above), the UE records successful L1L2 mobility-related information;
6) configured T312 threshold, this threshold may be a specific value or a percentage value; this percentage value may be a ratio of the time when the UE starts T312 in the source cell to the T312 value configured by the network when the UE receives the L1L2 mobility command; "the time when the UE starts T312 in the source cell" means that when the UE receives the L1L2 mobility command, the UE may have started the T312 timer in the source cell, and this timer has been running for a period of time, and the running time is the time (length) when the UE starts T312 in the source cell;
7) indication information indicating that after the UE completes the L1L2 mobility command, when the UE turns on T310 in the target cell and T310 exceeds a threshold (such as the following T310 threshold in 8), corresponding to the fourth threshold above), the UE records successful L1L2 mobility-related information;
8) configured T310 threshold, this threshold may be a specific value or a percentage value; this percentage value may be a ratio of the time that the UE starts T310 in the target cell after the UE completes the L1L2 mobility command to the T310 value configured by the network; "time that the UE starts T310 in the target cell" means that after the UE successfully executes the L1L2 mobility command to access the target cell, the UE starts the T310 timer in the target cell, and this timer has been running for a period of time, and the running time is the time (length) that the UE starts T310 in the target cell;
9) indication information indicating that after the UE completes the L1L2 mobility command, when the UE turns on T312 in the target cell and T312 exceeds a threshold (such as the following T312 threshold in 10), corresponding to the fifth threshold above), the UE records successful L1L2 mobility-related information;
10) configured T312 threshold, and this threshold may be a specific value or a percentage value; this percentage value may be a ratio of the time when the UE starts T312 in the target cell after the UE completes the L1L2 mobility command to the T312 value configured by the network; "time when the UE starts T312 in the target cell" means that after the UE successfully executes the L1L2 mobility command to access the target cell, the UE starts the T312 timer in the target cell, and this timer has been running for a period of time, and the running time is the time (length) that the UE starts T312 in the target cell;
11) indication information indicating that if the UE stays in the target TRP, target beam and/or target cell for a short time, and the time length is less than a threshold (such as the following threshold in 12), corresponding to the sixth threshold above), the UE records successful L1L2 mobility-related information;
12) configured threshold, this threshold may be the specific time value for a UE to stay in the target TRP, target beam and/or target cell, or it may be a percentage value; this percentage value may be a ratio of actual time the UE spends in the target TRP, target beam and/or target cell to time the UE spends in the target TRP, target beam and/or target cell configured by the network;
13) indication information indicating that when frequent ping-pong handovers occur in TRP, beam and/or cell, the UE records successful L1L2 mobility-related information.

The recording and reporting methods of the above information are the same as those in Example 1, and will not be described again here.

In view of the above, embodiments of the present disclosure provide an L1L2 mobility optimization method, in which UE records and reports L1L2 mobility-related information, the network can optimize L1L2 mobility, thereby reducing probability of L1L2 mobility failure, and optimizing L1L2 mobility performance.

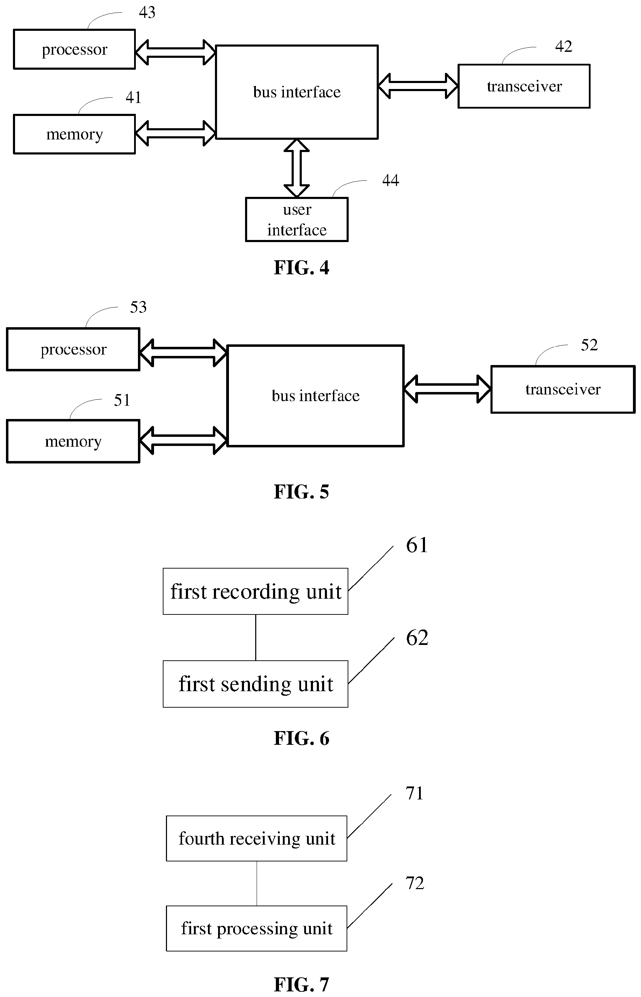

One embodiment of the present disclosure further provides an information processing device. The information processing device is a UE, as shown in FIG. 4, including a memory 41, a transceiver 42, and a processor 43.

The memory 41 is used to store a computer program; the transceiver 42 is used to send and receive data under the control of the processor 43; the processor 43 is used to read the computer program in the memory 41 and perform the following operations:
recording L1L2 mobility-related information;
sending the L1L2 mobility-related information to the network equipment; where the L1L2 stands for layer 1 and/or layer 2.

According to the information processing device provided in the embodiment of the present disclosure, by recording L1L2 mobility-related information and sending the L1L2 mobility-related information to the network equipment, where the L1L2 stands for layer 1 and/or layer 2, it can support the network equipment to perform corresponding L1L2 mobility optimization according to L1L2 mobility-related information, thereby supporting optimization for L1L2 mobility.

Specifically, the transceiver 42 is used to receive and send data under the control of the processor 43.

In FIG. 4, a bus architecture may include any number of interconnected bus and bridge. Specifically, various circuits of one or more processors, which are represented by the processor 43, and one or more memories, which are represented by the memory 41, are linked together. The bus architecture may link various other circuits, such as a peripheral device, voltage regulator and a power management circuit together. These features are well known in this field; therefore, this disclosure does not make further description on these features. The bus interface provides an interface. The transceiver 42 may be multiple elements, including a transmitter and a receiver and provide units, which communicate with other devices on the transmission medium, and the transmission medium includes wireless channels, wired channels, optical cables and other transmission medium. For different UEs, a user interface 44 may be an interface that can be connected to external or internal devices. The connected devices include but are not limited to a small keyboard, a display, a speaker, a microphone, a joystick, etc.

The processor 43 is responsible for managing the bus architecture and the normal processing. The memory 41 may be used to store data used by the processor 43 for performing operations.

In some embodiments, the processor 43 may be a central processing unit (CPU), an application specific integrated circuit (ASIC), a field-programmable gate array (FPGA) or a complex programmable logic device (CPLD). The processor may also adopt multi-core architecture.

The processor calls the computer program stored in the memory to execute any of the methods provided by the embodiments of the present disclosure according to obtained executable instructions. The processor and the memory may also be arranged physically separately.

Further, the operation further includes: receiving, through the transceiver, L1L2 mobility configuration information sent by the network equipment; where the L1L2 mobility configuration information is used to perform L1L2 mobility.

The recording L1L2 mobility-related information, includes: recording the L1L2 mobility-related information in case of determining that a recording condition is met; where the recording condition includes one or more of the following: that is not received L1L2 mobility command sent by the network equipment, and a radio link failure (RLF) occurs in a source cell; that is not received L1L2 mobility command sent by the network equipment, and beam failure occurs at a source transmission and receiving point (TRP) and/or source beam; receiving the L1L2 mobility command sent by the network equipment, performing an L1L2 mobility command, but failing to access a target TRP and/or target beam; receiving the L1L2 mobility command sent by the network equipment, performing an L1L2 mobility command, but failing to access a target cell; receiving the L1L2 mobility command sent by the network equipment, performing an L1L2 mobility command, performing an L1L2 mobility command successfully but a beam failure occurring in the target TRP and/or target beam; receiving the L1L2 mobility command sent by the network equipment, performing an L1L2 mobility command, performing an L1L2 mobility command successfully but RLF occurring in the target cell; not receiving the L1L2 mobility command sent by the network equipment, receiving other mobility commands except the L1L2 mobility command, failure or success in performing other mobility commands, or success but critical failure; or, receiving the L1L2 mobility command sent by the network equipment, performing the L1L2 mobility command, performing the L1L2 mobility successfully but a critical failure occurs during the L1L2 mobility procedure.

In the embodiment of the present disclosure, the occurrence of critical failure includes one or more of the following situations: a timing duration of an L1L2 mobility-related timer exceeds a first threshold; when receiving the L1L2 mobility command, a timer T310 of a source cell is turned on and a timing duration exceeds a second threshold, or a timer T312 of a source cell is turned on and a timing duration exceeds a third threshold; after completing the L1L2 mobility command, a timer T310 of a target cell is turned on and a timing duration exceeds a fourth threshold, or a timer T312 of the target cell is turned on and a timing duration exceeds a fifth threshold; a duration of staying at the target TRP, target beam and/or target cell is less than a sixth threshold; or, frequent ping-pong handover of connected TRP, beam and/or cell.

Further, the operation also includes: before recording L1L2 mobility-related information, receiving, through the transceiver, threshold information and/or trigger condition indication information sent by the network equipment; wherein the threshold information includes one or more of the following: the first threshold; the second threshold; the third threshold; the fourth threshold; the fifth threshold; or the sixth threshold.

The L1L2 mobility-related information includes one or more of the following: cell, beam and/or TRP information; time information; or, first information other than the cell, beam and/or TRP information and time information.

In embodiment of the present disclosure, the cell, beam and/or TRP information includes one or more of the following: identifier information of a source TRP, source beam, target TRP and/or target beam; measurement result information of a source TRP, source beam, target TRP and/or target beam; measurement configuration information of a configured TRP and/or beam; measurement result information of TRP and/or beam; identifier information of TRP and/or beam recovered after failure; measurement result information of TRP and/or beam recovered after failure; pre-configured candidate cell configuration information; identifier information of a source cell and a target cell; measurement result information of a source cell and a target cell; measurement result information of a candidate cell; identifier information of a cell recovered and/or reestablished after failure; or, measurement result information of a cell recovered and/or reestablished after failure.

The time information includes one or more of the following: a time length from execution of the L1L2 mobility command to failure of the L1L2 mobility; a time length from receiving the L1L2 mobility configuration information to RLF and/or beam failure; a time length from receiving the L1L2 mobility configuration information to execution of the L1L2 mobility command; a time length from receiving the L1L2 mobility configuration information to execution of other mobility command, where the other mobility command refers to mobility commands other than the L1L2 mobility commands; a time length from receiving the L1L2 mobility configuration information to failure of execution of other mobility command; duration when RLF occurs in a target cell from receiving L1L2 mobility configuration information to successful execution of other mobility command; beam application time configured by the network equipment; execution time of the L1L2 mobility command configured by the network equipment; duration when a timer is turned on from receiving the L1L2 mobility command or L1L2 mobility configuration information to the beam application time; duration when a timer expires from receiving the L1L2 mobility command or L1L2 mobility configuration information to the beam application time; user plane data interruption time; duration when RLF occurs in the target cell from execution of the L1L2 mobility command to success of execution of the L1L2; or, duration when RLF occurs in the target cell from receiving the L1L2 mobility configuration information to success of execution of the L1L2.

In the embodiment of the present disclosure, the first information includes one or more of the following: indication information of whether to fall back to a source TRP and/or source cell; random access (RACH) related information; timing advance (TA) related information; mobility failure type indication information; mobility failure cause; pre-configured candidate cell uplink resource configuration information; pre-configured candidate cell execution condition information; indication information on whether to perform a RACH procedure or a RACH-less procedure; or, trigger reason, which is used to indicate a reason for triggering critical failure.

The recording L1L2 mobility-related information, includes: recording the L1L2 mobility-related information in at least one new report and/or in at least one defined report.

Further, the operation further includes: using the transceiver to send notification information to the network equipment in a first manner; where the notification information is used to indicate that the UE stores the L1L2 mobility-related information, and the first manner includes one or more of the following: carrying an indication of availability of the L1L2 mobility-related information in an uplink radio resource control (RRC) message; or using L1L2 signaling indication.

In the embodiment of the present disclosure, the operation further includes: before sending the L1L2 mobility-related information to the network equipment, receiving, through the transceiver, an obtaining request for the L1L2 mobility-related information sent by the network equipment through a first message; where the first message includes one or more of the following: UE information request message; or new message.

The sending the L1L2 mobility-related information to a network equipment, includes: sending the L1L2 mobility-related information to the network equipment through a second message according to the obtaining request; where the second message includes one or more of the following: UE information response message; or new message.

In the embodiment of the present disclosure, L1L2 mobility-related cells include: cell under single-connectivity; or a primary cell (PCell) of a primary cell group, a primary cell (PSCell) or secondary cell (SCell) of a secondary cell group under multi-connectivity.

It is to be noted that the foregoing device provided in the embodiments of the present disclosure can perform all the method steps performed in the foregoing method embodiments on UE-side, and can achieve the same technical effect. The parts and beneficial effects in this embodiment that are the same as those in the method embodiment will not be described in detail here.

One embodiment of the present disclosure further provides an information processing device. The information processing device is a network equipment, as shown in FIG. 5, including a memory 51, a transceiver 52, and a processor 53.

The memory 51 is used to store a computer program; the transceiver 52 is used to send and receive data under the control of the processor 53; the processor 53 is used to read the computer program in the memory 51 and perform the following operations:
receiving L1L2 mobility-related information sent by a user equipment (UE);
performing corresponding L1L2 mobility optimization according to the L1L2 mobility-related information; where the L1L2 stands for layer 1 and/or layer 2.

According to the information processing device provided in the embodiment of the present disclosure, by receiving L1L2 mobility-related information sent by a user equipment (UE) and performing corresponding L1L2 mobility optimization according to the L1L2 mobility-related information, where the L1L2 stands for layer 1 and/or layer 2, it can achieve optimization for L1L2 mobility.

In FIG. 5, a bus architecture may include any number of interconnected bus and bridge. Specifically, various circuits of one or more processors, which are represented by the processor 53, and one or more memories, which are represented by the memory 51, are linked together. The bus architecture may link various other circuits, such as a peripheral device, voltage regulator and a power management circuit together. These features are well known in this field; therefore, this disclosure does not make further description on these features. The bus interface provides an interface. The transceiver 52 may be multiple elements, including a transmitter and a receiver and provide units, which communicate with other devices on the transmission medium, and the transmission medium includes wireless channels, wired channels, optical cables and other transmission medium. The processor 53 is responsible for managing the bus architecture and the normal processing. The memory 51 may be used to store data used by the processor 53 for performing operations.

The processor 53 may be a central processing unit (CPU), an application specific integrated circuit (ASIC), a field-programmable gate array (FPGA) or a complex programmable logic device (CPLD). The processor may also adopt multi-core architecture.

Further, the operation further includes: sending L1L2 mobility configuration information to the UE through the transceiver; where the L1L2 mobility configuration information is used to perform L1L2 mobility.

The L1L2 mobility-related information is recorded by the UE in case of determining that a recording condition is met; where the recording condition includes one or more of the following: that is not received L1L2 mobility command sent by the network equipment, and a radio link failure (RLF) occurs in a source cell; that is not received L1L2 mobility command sent by the network equipment, and beam failure occurs at a source transmission and receiving point (TRP) and/or source beam; receiving the L1L2 mobility command sent by the network equipment, performing an L1L2 mobility command, but failing to access a target TRP and/or target beam; receiving the L1L2 mobility command sent by the network equipment, performing an L1L2 mobility command, but failing to access a target cell; receiving the L1L2 mobility command sent by the network equipment, performing an L1L2 mobility command, performing an L1L2 mobility command successfully but a beam failure occurring in the target TRP and/or target beam; receiving the L1L2 mobility command sent by the network equipment, performing an L1L2 mobility command, performing an L1L2 mobility command successfully but RLF occurring in the target cell; not receiving the L1L2 mobility command sent by the network equipment, receiving other mobility commands except the L1L2 mobility command, failure or success in performing other mobility commands, or success but critical failure; or, receiving the L1L2 mobility command sent by the network equipment, performing the L1L2 mobility command, performing the L1L2 mobility successfully but a critical failure occurs during the L1L2 mobility procedure.

In the embodiment of the present disclosure, the occurrence of critical failure includes one or more of the following situations: a timing duration of an L1L2 mobility-related timer exceeds a first threshold; when receiving the L1L2 mobility command, a timer T310 of a source cell is turned on and a timing duration exceeds a second threshold, or a timer T312 of a source cell is turned on and a timing duration exceeds a third threshold; after completing the L1L2 mobility command, a timer T310 of a target cell is turned on and a timing duration exceeds a fourth threshold, or a timer T312 of the target cell is turned on and a timing duration exceeds a fifth threshold; a duration of staying at the target TRP, target beam and/or target cell is less than a sixth threshold; or, frequent ping-pong handover of connected TRP, beam and/or cell.

Further, the operation further includes: before receiving the L1L2 mobility-related information sent by the UE, sending threshold information and/or trigger condition indication information to the UE through the transceiver; where the threshold information includes one or more of the following: the first threshold; the second threshold; the third threshold; the fourth threshold; the fifth threshold; or, the sixth threshold.

The L1L2 mobility-related information includes one or more of the following: cell, beam and/or TRP information; time information; or, first information other than the cell, beam and/or TRP information and time information.

In the embodiment of the present disclosure, the cell, beam and/or TRP information includes one or more of the following: identifier information of a source TRP, source beam, target TRP and/or target beam; measurement result information of a source TRP, source beam, target TRP and/or target beam; measurement configuration information of a configured TRP and/or beam; measurement result information of TRP and/or beam; identifier information of TRP and/or beam recovered after failure; measurement result information of TRP and/or beam recovered after failure; pre-configured candidate cell configuration information; identifier information of a source cell and a target cell; measurement result information of a source cell and a target cell; measurement result information of a candidate cell; identifier information of a cell recovered and/or reestablished after failure; or, measurement result information of a cell recovered and/or reestablished after failure.

The time information includes one or more of the following: a time length from execution of the L1L2 mobility command to failure of the L1L2 mobility; a time length from receiving the L1L2 mobility configuration information to RLF and/or beam failure; a time length from receiving the L1L2 mobility configuration information to execution of the L1L2 mobility command; a time length from receiving the L1L2 mobility configuration information to execution of other mobility command, where the other mobility command refers to mobility commands other than the L1L2 mobility commands; a time length from receiving the L1L2 mobility configuration information to failure of execution of other mobility command; duration when RLF occurs in a target cell from receiving L1L2 mobility configuration information to successful execution of other mobility command; beam application time configured by the network equipment; execution time of the L1L2 mobility command configured by the network equipment; duration when a timer is turned on from receiving the L1L2 mobility command or L1L2 mobility configuration information to the beam application time; duration when a timer expires from receiving the L1L2 mobility command or L1L2 mobility configuration information to the beam application time; user plane data interruption time; duration when RLF occurs in the target cell from execution of the L1L2 mobility command to success of execution of the L1L2; or, duration when RLF occurs in the target cell from receiving the L1L2 mobility configuration information to success of execution of the L1L2.

In the embodiment of the present disclosure, the first information includes one or more of the following: indication information of whether to fall back to a source TRP and/or source cell; random access (RACH) related information; timing advance (TA) related information; mobility failure type indication information; mobility failure cause; pre-configured candidate cell uplink resource configuration information; pre-configured candidate cell execution condition information; indication information on whether to perform a RACH procedure or a RACH-less procedure; or, trigger reason, which is used to indicate a reason for triggering critical failure.

The L1L2 mobility-related information is recorded in at least one new report and/or in at least one defined report.

Further, the operation further includes: before receiving the L1L2 mobility-related information sent by the UE, receiving notification information sent by the UE in the first manner; where the notification information is used to indicate that the UE stores the L1L2 mobility-related information, and the first manner includes one or more of the following: carrying an indication of availability of the L1L2 mobility-related information in an uplink radio resource control (RRC) message; or using L1L2 signaling indication.

In the embodiment of the present disclosure, the operation further includes: before receiving the L1L2 mobility-related information sent by the UE, sending an obtaining request for the L1L2 mobility-related information to the UE through a first message; where the first message includes one or more of the following: UE information request message; or new message.

The receiving the L1L2 mobility-related information sent by the UE, includes: receiving the L1L2 mobility-related information sent by the UE through a second message; where the second message includes one or more of the following: UE information response message; or new message.

In this embodiment of the present disclosure, the performing corresponding L1L2 mobility optimization based on the L1L2 mobility-related information includes one or more of the following: sending the L1L2 mobility-related information to a first node through an interface message, thereby enabling the first node to send the L1L2 mobility-related information to a second node; where the first node includes a source node, and the second node includes a target node; or, the first node includes a target node, and the second node includes a source node; or, the first node includes a source master node, and the second node includes a target primary node; or, the first node includes a target primary node, and the second node includes a source master node; or, the first node includes a target primary node, and the second node includes a target secondary node; or, the first node includes a target secondary node, and the second node includes a primary node; or, the first node includes a centralized unit (CU) node, the second node includes a source distribution unit (DU) node and/or a target DU node; or the first node includes a source DU node, the second node includes a target DU node; or, the first node includes a target DU node, and the second node includes a source DU node.

The interface message used to transmit the L1L2 mobility-related information include one or more of the following: defined XN interface message between base stations; newly added XN interface message; defined NG interface message between the core network and the base station; newly added NG interface message; defined first frequency band F1 interface message; or newly added F1 interface message.

In the embodiment of the present disclosure, L1L2 mobility-related cells include: cell under single-connectivity; or a primary cell (PCell) of a primary cell group, a primary cell (PSCell) or secondary cell (SCell) of a secondary cell group under multi-connectivity.

It is to be noted that the foregoing device provided in the embodiments of the present disclosure can perform all the method steps performed in the foregoing method embodiments on network equipment-side, and can achieve the same technical effect. The parts and beneficial effects in this embodiment that are the same as those in the method embodiment will not be described in detail her

One embodiment of the present disclosure further provides an information processing apparatus, applied to a UE, as shown in FIG. 6, including:
a first recording unit 61 used to record L1L2 mobility-related information;
a first sending unit 62 used to send the L1L2 mobility-related information to the network equipment; where the L1L2 stands for layer 1 and/or layer 2.

According to the information processing device provided in the embodiment of the present disclosure, by recording L1L2 mobility-related information and sending the L1L2 mobility-related information to the network equipment, where the L1L2 stands for layer 1 and/or layer 2, it can support the network equipment to perform corresponding L1L2 mobility optimization according to L1L2 mobility-related information, thereby supporting optimization for L1L2 mobility.

Further, the information processing apparatus further includes: a first receiving unit used to receive L1L2 mobility configuration information sent by the network equipment; where the L1L2 mobility configuration information is used to perform L1L2 mobility.

The recording L1L2 mobility-related information, includes: recording the L1L2 mobility-related information in case of determining that a recording condition is met; where the recording condition includes one or more of the following: that is not received L1L2 mobility command sent by the network equipment, and a radio link failure (RLF) occurs in a source cell; that is not received L1L2 mobility command sent by the network equipment, and beam failure occurs at a source transmission and receiving point (TRP) and/or source beam; receiving the L1L2 mobility command sent by the network equipment, performing an L1L2 mobility command, but failing to access a target TRP and/or target beam; receiving the L1L2 mobility command sent by the network equipment, performing an L1L2 mobility command, but failing to access a target cell; receiving the L1L2 mobility command sent by the network equipment, performing an L1L2 mobility command, performing an L1L2 mobility command successfully but a beam failure occurring in the target TRP and/or target beam; receiving the L1L2 mobility command sent by the network equipment, performing an L1L2 mobility command, performing an L1L2 mobility command successfully but RLF occurring in the target cell; not receiving the L1L2 mobility command sent by the network equipment, receiving other mobility commands except the L1L2 mobility command, failure or success in performing other mobility commands, or success but critical failure; or, receiving the L1L2 mobility command sent by the network equipment, performing the L1L2 mobility command, performing the L1L2 mobility successfully but a critical failure occurs during the L1L2 mobility procedure.

In the embodiment of the present disclosure, the occurrence of critical failure includes one or more of the following situations: a timing duration of an L1L2 mobility-related timer exceeds a first threshold; when receiving the L1L2 mobility command, a timer T310 of a source cell is turned on and a timing duration exceeds a second threshold, or a timer T312 of a source cell is turned on and a timing duration exceeds a third threshold; after completing the L1L2 mobility command, a timer T310 of a target cell is turned on and a timing duration exceeds a fourth threshold, or a timer T312 of the target cell is turned on and a timing duration exceeds a fifth threshold; a duration of staying at the target TRP, target beam and/or target cell is less than a sixth threshold; or frequent ping-pong handover of connected TRP, beam and/or cell.

Further, the information processing apparatus further includes: a second receiving unit used to, before recording L1L2 mobility-related information, receive threshold information and/or trigger condition indication information sent by the network equipment; wherein the threshold information includes one or more of the following: the first threshold; the second threshold; the third threshold; the fourth threshold; the fifth threshold; or the sixth threshold.

The L1L2 mobility-related information includes one or more of the following: cell, beam and/or TRP information; time information; or, first information other than the cell, beam and/or TRP information and time information.

In embodiment of the present disclosure, the cell, beam and/or TRP information includes one or more of the following: identifier information of a source TRP, source beam, target TRP and/or target beam; measurement result information of a source TRP, source beam, target TRP and/or target beam; measurement configuration information of a configured TRP and/or beam; measurement result information of TRP and/or beam; identifier information of TRP and/or beam recovered after failure; measurement result information of TRP and/or beam recovered after failure; pre-configured candidate cell configuration information; identifier information of a source cell and a target cell; measurement result information of a source cell and a target cell; measurement result information of a candidate cell; identifier information of a cell recovered and/or reestablished after failure; or measurement result information of a cell recovered and/or reestablished after failure.

The time information includes one or more of the following: a time length from execution of the L1L2 mobility command to failure of the L1L2 mobility; a time length from receiving the L1L2 mobility configuration information to RLF and/or beam failure; a time length from receiving the L1L2 mobility configuration information to execution of the L1L2 mobility command; a time length from receiving the L1L2 mobility configuration information to execution of other mobility command, where the other mobility command refers to mobility commands other than the L1L2 mobility commands; a time length from receiving the L1L2 mobility configuration information to failure of execution of other mobility command; duration when RLF occurs in a target cell from receiving L1L2 mobility configuration information to successful execution of other mobility command; beam application time configured by the network equipment; execution time of the L1L2 mobility command configured by the network equipment; duration when a timer is turned on from receiving the L1L2 mobility command or L1L2 mobility configuration information to the beam application time; duration when a timer expires from receiving the L1L2 mobility command or L1L2 mobility configuration information to the beam application time; user plane data interruption time; duration when RLF occurs in the target cell from execution of the L1L2 mobility command to success of execution of the L1L2; or, duration when RLF occurs in the target cell from receiving the L1L2 mobility configuration information to success of execution of the L1L2.

In the embodiment of the present disclosure, the first information includes one or more of the following: indication information of whether to fall back to a source TRP and/or source cell; random access (RACH) related information; timing advance (TA) related information; mobility failure type indication information; mobility failure cause; pre-configured candidate cell uplink resource configuration information; pre-configured candidate cell execution condition information; indication information on whether to perform a RACH procedure or a RACH-less procedure; or, trigger reason, which is used to indicate a reason for triggering critical failure.

The recording L1L2 mobility-related information, includes: recording the L1L2 mobility-related information in at least one new report and/or in at least one defined report.

Further, the information processing apparatus further includes: a second sending unit used to send notification information to the network equipment in a first manner; where the notification information is used to indicate that the UE stores the L1L2 mobility-related information, and the first manner includes one or more of the following: carrying an indication of availability of the L1L2 mobility-related information in an uplink radio resource control (RRC) message; or using L1L2 signaling indication.

In the embodiment of the present disclosure, the information processing apparatus further includes a third receiving unit used to, before sending the L1L2 mobility-related information to the network equipment, receive an obtaining request for the L1L2 mobility-related information sent by the network equipment through a first message; where the first message includes one or more of the following: UE information request message; or new message.

The sending the L1L2 mobility-related information to a network equipment, includes: sending the L1L2 mobility-related information to the network equipment through a second message according to the obtaining request; where the second message includes one or more of the following: UE information response message; or new message.

In the embodiment of the present disclosure, L1L2 mobility-related cells include: cell under single-connectivity; or a primary cell (PCell) of a primary cell group, a primary cell (PSCell) or secondary cell (SCell) of a secondary cell group under multi-connectivity.

It is to be noted that the foregoing apparatus provided in the embodiments of the present disclosure can perform all the method steps performed in the foregoing method embodiments on UE-side, and can achieve the same technical effect. The parts and beneficial effects in this embodiment that are the same as those in the method embodiment will not be described in detail here.

One embodiment of the present disclosure further provides an information processing apparatus, applied to a network equipment, as shown in FIG. 7, including:
a fourth receiving unit 71 used to receive L1L2 mobility-related information sent by a user equipment (UE);
a first processing unit 72 used to perform corresponding L1L2 mobility optimization according to the L1L2 mobility-related information; where the L1L2 stands for layer 1 and/or layer 2.

According to the information processing apparatus provided in the embodiment of the present disclosure, by receiving L1L2 mobility-related information sent by a user equipment (UE) and performing corresponding L1L2 mobility optimization according to the L1L2 mobility-related information, where the L1L2 stands for layer 1 and/or layer 2, it can achieve optimization for L1L2 mobility.

Further, the information processing apparatus further includes a third sending unit used to send L1L2 mobility configuration information to the UE; where the L1L2 mobility configuration information is used to perform L1L2 mobility.

The L1L2 mobility-related information is recorded by the UE in case of determining that a recording condition is met; where the recording condition includes one or more of the following: that is not received L1L2 mobility command sent by the network equipment, and a radio link failure (RLF) occurs in a source cell; that is not received L1L2 mobility command sent by the network equipment, and beam failure occurs at a source transmission and receiving point (TRP) and/or source beam; receiving the L1L2 mobility command sent by the network equipment, performing an L1L2 mobility command, but failing to access a target TRP and/or target beam; receiving the L1L2 mobility command sent by the network equipment, performing an L1L2 mobility command, but failing to access a target cell; receiving the L1L2 mobility command sent by the network equipment, performing an L1L2 mobility command, performing an L1L2 mobility command successfully but a beam failure occurring in the target TRP and/or target beam; receiving the L1L2 mobility command sent by the network equipment, performing an L1L2 mobility command, performing an L1L2 mobility command successfully but RLF occurring in the target cell; not receiving the L1L2 mobility command sent by the network equipment, receiving other mobility commands except the L1L2 mobility command, failure or success in performing other mobility commands, or success but critical failure; or, receiving the L1L2 mobility command sent by the network equipment, performing the L1L2 mobility command, performing the L1L2 mobility successfully but a critical failure occurs during the L1L2 mobility procedure.

In the embodiment of the present disclosure, the occurrence of critical failure includes one or more of the following situations: a timing duration of an L1L2 mobility-related timer exceeds a first threshold; when receiving the L1L2 mobility command, a timer T310 of a source cell is turned on and a timing duration exceeds a second threshold, or a timer T312 of a source cell is turned on and a timing duration exceeds a third threshold; after completing the L1L2 mobility command, a timer T310 of a target cell is turned on and a timing duration exceeds a fourth threshold, or a timer T312 of the target cell is turned on and a timing duration exceeds a fifth threshold; a duration of staying at the target TRP, target beam and/or target cell is less than a sixth threshold; or, frequent ping-pong handover of connected TRP, beam and/or cell.

Further, the information processing apparatus further includes a fourth sending unit used to, before receiving the L1L2 mobility-related information sent by the UE, send threshold information and/or trigger condition indication information to the UE through the transceiver; where the threshold information includes one or more of the following: the first threshold; the second threshold; the third threshold; the fourth threshold; the fifth threshold; or, the sixth threshold.

The L1L2 mobility-related information includes one or more of the following: cell, beam and/or TRP information; time information; first information other than the cell, beam and/or TRP information and time information.

In the embodiment of the present disclosure, the cell, beam and/or TRP information includes one or more of the following: identifier information of a source TRP, source beam, target TRP and/or target beam; measurement result information of a source TRP, source beam, target TRP and/or target beam; measurement configuration information of a configured TRP and/or beam; measurement result information of TRP and/or beam; identifier information of TRP and/or beam recovered after failure; measurement result information of TRP and/or beam recovered after failure; pre-configured candidate cell configuration information; identifier information of a source cell and a target cell; measurement result information of a source cell and a target cell; measurement result information of a candidate cell; identifier information of a cell recovered and/or reestablished after failure; or, measurement result information of a cell recovered and/or reestablished after failure.

The time information includes one or more of the following: a time length from execution of the L1L2 mobility command to failure of the L1L2 mobility; a time length from receiving the L1L2 mobility configuration information to RLF and/or beam failure; a time length from receiving the L1L2 mobility configuration information to execution of the L1L2 mobility command; a time length from receiving the L1L2 mobility configuration information to execution of other mobility command, where the other mobility command refers to mobility commands other than the L1L2 mobility commands; a time length from receiving the L1L2 mobility configuration information to failure of execution of other mobility command; duration when RLF occurs in a target cell from receiving L1L2 mobility configuration information to successful execution of other mobility command; beam application time configured by the network equipment; execution time of the L1L2 mobility command configured by the network equipment; duration when a timer is turned on from receiving the L1L2 mobility command or L1L2 mobility configuration information to the beam application time; duration when a timer expires from receiving the L1L2 mobility command or L1L2 mobility configuration information to the beam application time; user plane data interruption time; duration when RLF occurs in the target cell from execution of the L1L2 mobility command to success of execution of the L1L2; or, duration when RLF occurs in the target cell from receiving the L1L2 mobility configuration information to success of execution of the L1L2.

In the embodiment of the present disclosure, the first information includes one or more of the following: indication information of whether to fall back to a source TRP and/or source cell; random access (RACH) related information; timing advance (TA) related information; mobility failure type indication information; mobility failure cause; pre-configured candidate cell uplink resource configuration information; pre-configured candidate cell execution condition information; indication information on whether to perform a RACH procedure or a RACH-less procedure; or, trigger reason, which is used to indicate a reason for triggering critical failure.

The L1L2 mobility-related information is recorded in at least one new report and/or in at least one defined report.

Further, the information processing apparatus further includes a fourth receiving unit used to, before receiving the L1L2 mobility-related information sent by the UE, receive notification information sent by the UE in the first manner; where the notification information is used to indicate that the UE stores the L1L2 mobility-related information, and the first manner includes one or more of the following: carrying an indication of availability of the L1L2 mobility-related information in an uplink radio resource control (RRC) message; or using L1L2 signaling indication.

In the embodiment of the present disclosure, the information processing apparatus further includes a fifth sending unit used to, before receiving the L1L2 mobility-related information sent by the UE, send an obtaining request for the L1L2 mobility-related information to the UE through a first message; where the first message includes one or more of the following: UE information request message; or new message.

The receiving the L1L2 mobility-related information sent by the UE, includes: receiving the L1L2 mobility-related information sent by the UE through a second message; where the second message includes one or more of the following: UE information response message; or new message.

In this embodiment of the present disclosure, the performing corresponding L1L2 mobility optimization based on the L1L2 mobility-related information includes one or more of the following: sending the L1L2 mobility-related information to a first node through an interface message, thereby enabling the first node to send the L1L2 mobility-related information to a second node; where the first node includes a source node, and the second node includes a target node; or, the first node includes a target node, and the second node includes a source node; or, the first node includes a source master node, and the second node includes a target primary node; or, the first node includes a target primary node, and the second node includes a source master node; or, the first node includes a target primary node, and the second node includes a target secondary node; or, the first node includes a target secondary node, and the second node includes a primary node; or, the first node includes a centralized unit (CU) node, the second node includes a source distribution unit (DU) node and/or a target DU node; or the first node includes a source DU node, the second node includes a target DU node; or, the first node includes a target DU node, and the second node includes a source DU node.

The interface message used to transmit the L1L2 mobility-related information include one or more of the following: defined XN interface message between base stations; newly added XN interface message; defined NG interface message between the core network and the base station; newly added NG interface message; defined first frequency band F1 interface message; or newly added F1 interface message.

In the embodiment of the present disclosure, L1L2 mobility-related cells include: cell under single-connectivity; or a primary cell (PCell) of a primary cell group, a primary cell (PSCell) or secondary cell (SCell) of a secondary cell group under multi-connectivity.

It is to be noted that the foregoing apparatus provided in the embodiments of the present disclosure can perform all the method steps performed in the foregoing method embodiments on network equipment-side, and can achieve the same technical effect. The parts and beneficial effects in this embodiment that are the same as those in the method embodiment will not be described in detail her

It is to be noted that division of units in the embodiment of the present disclosure is exemplary, and is only a logical function division, and there may be another division manner in actual implementation. In addition, each functional unit in each embodiment of the present application may be integrated into one processing unit, each unit may exist separately physically, or two or more units may be integrated into one unit. The foregoing integrated units may be implemented in the form of hardware or in the form of software functional units.

If the integrated units are realized in the form of software function units and sold or used as independent products, they may be stored in a processor-readable storage medium. Based on this understanding, the essence of the technical solution of the present disclosure or the part that contributes to the related art or the part of the technical solution may be embodied in the form of a software product. The computer software product is stored in a storage medium, includes several instructions which enables a computer device (which may be a personal computer, a server, or a network device, etc.) or a processor to execute all or part of the steps of the methods described in various embodiments of the present disclosure. The storage medium includes various media capable of storing program codes such as U disk, mobile hard disk, ROM, RAM, magnetic disk or optical disk.

One embodiment of the present disclosure further provides a processor-readable storage medium, which includes a computer program stored thereon. The computer program is used to cause a processor to execute the foregoing method on the UE-side or the network equipment-side.

The processor-readable storage medium may be any available medium or data storage device that can be accessed by a processor, including but not limited to magnetic storage (such as floppy disk, hard disk, magnetic tape, magneto-optical disk (MO)), optical storage (such as CD, DVD, BD, HVD), and semiconductor memory (such as ROM, EPROM, EEPROM, non-volatile memory (Nand flash), solid-state drive (SSD)).

The implementation embodiments of the methods on the UE side or the network equipment side described above are all applicable to the embodiments of the processor-readable storage medium and can achieve the same technical effects.

Those skilled in the art should understand that the embodiments of the present application may be provided as methods, systems, or computer program products. Accordingly, in this application, an entirely hardware embodiment, an entirely software embodiment, or an embodiment combining software and hardware aspects may be adopted. Further, this application may adopt the form of a computer program product implemented on one or more computer available storage media (including but not limited to disk memory and optical memory) including computer available program codes.

The present disclosure has been described with reference to the flow charts and/or block diagrams of the method, device (system) and computer program product according to the embodiments of the present disclosure. It should be understood that computer program instructions may be used to implement each of the work flows and/or blocks in the flow charts and/or the block diagrams, and the combination of the work flows and/or blocks in the flow charts and/or the block diagrams. These computer program instructions may be provided to a processor of a common computer, a dedicate computer, an embedded processor or any other programmable data processing devices to create a machine, so that instructions executable by the processor of the computer or the other programmable data processing devices may create a device to achieve the functions assigned in one or more work flows in the flow chart and/or one or more blocks in the block diagram.

These processor-executable instructions may also be stored in a computer readable storage that may guide the computer or the other programmable data process devices to function in a certain way, so that the instructions stored in the computer readable storage may create a product including an instruction unit which achieves the functions assigned in one or more flows in the flow chart and/or one or more blocks in the block diagram.

These processor-executable instructions may also be loaded in the computer or the other programmable data process devices, so that a series of operation steps are executed on the computer or the other programmable devices to create processes achieved by the computer. Therefore, the instructions executed in the computer or the other programmable devices provide the steps for achieving the function assigned in one or more flows in the flow chart and/or one or more blocks in the block diagram.

It should be noted and understood that the division of the above modules is only a division of logical functions, which may be fully or partially integrated into a physical entity or physically separated in actual implementations. These modules may all be implemented in the form of software called by processing elements; or may all be implemented in the form of hardware; or, some modules may be implemented in the form of software called by processing elements, and some modules may be implemented in the form of hardware. For example, one module may be a separate processing element, or may be integrated into a certain chip of the above device, or, may be stored in the memory of the above device in the form of program code, and a certain processing element of the above device may call and execute the functions of the determination module. Other modules have similar implementations. In addition, all or part of these modules may be integrated together, and may be implemented independently. The processing element mentioned herein may be an integrated circuit with signal processing capability. In the implementation process, the various steps of the above method or the above various modules may be implemented by an integrated logic circuit in hardware form in elements of a processor or implemented by instructions in the form of software.

For example, the various modules, units, subunits or submodules may be one or more integrated circuits configured to implement the above methods, such as one or more application specific integrated circuits (Application Specific Integrated Circuit, ASIC), or one or more microprocessors (Digital Signal Processor, DSP), or one or more field programmable gate arrays (Field Programmable Gate Array, FPGA), etc. As another example, when a module described above is implemented in the form of scheduling program codes by a processing element, the processing element may be a general purpose processor, such as a central processing unit (Central Processing Unit, CPU) or other processors that may call program codes. As another example, these modules may be integrated together and implemented as a system-on-a-chip (system-on-a-chip, SOC).

Terms such as "first" and "second" in the specification and the claims of the present disclosure are used to distinguish similar objects and are not necessarily used to describe a specific order or sequence. It should be understood that the terms used in this way may be interchanged under appropriate circumstances, so that the embodiments of the present disclosure described herein may be implemented in a sequence other than those illustrated or described herein. In addition, terms such as "including" and "having" and any variations thereof are intended to cover non-exclusive inclusion. For example, a process, method, system, product or device including a series of steps or units is not limited to the steps or units that are clearly listed and may include other steps or units that are not clearly listed or are inherent to the process, method, product, or device. Moreover, the term "and/or" used in the specification and the claims indicates involving at least one of connected objects, for example, A and/or B and/or C means 7 situations, including: A alone, B alone, C alone, both A and B, both B and C, both A and C, and all of A, B and C. Similarly, the use of "at least one of A and B" in this specification and claims should be understood as "A alone, B alone, or both A and B".

Obviously, those skilled in the art can make various changes and modifications to the present disclosure without departing from the spirit and scope of the present disclosure. Thus, if these modifications and variations of the present disclosure fall within the scope of the claims of the present disclosure and equivalent technologies thereof, the present disclosure also intends to include these modifications and variations.

## Claims

1. An information processing method, applied to a user equipment (UE), comprising:
recording, by the UE, L1L2 mobility-related information;
sending the L1L2 mobility-related information to the network equipment; wherein the L1L2 stands for layer 1 and/or layer 2.

2. The method according to claim 1, wherein the method further includes:
receiving L1L2 mobility configuration information sent by the network equipment; wherein the L1L2 mobility configuration information is used to perform L1L2 mobility.

3. The method according to claim 1, wherein the recording L1L2, by the UE, mobility-related information, includes:
recording the L1L2 mobility-related information in case of determining that a recording condition is met; wherein the recording condition includes one or more of the following:
that is not received L1L2 mobility command sent by the network equipment, and a radio link failure (RLF) occurs in a source cell;
that is not received L1L2 mobility command sent by the network equipment, and beam failure occurs at a source transmission and receiving point (TRP) and/or source beam;
receiving the L1L2 mobility command sent by the network equipment, performing an L1L2 mobility command, but failing to access a target TRP and/or target beam;
receiving the L1L2 mobility command sent by the network equipment, performing an L1L2 mobility command, but failing to access a target cell;
receiving the L1L2 mobility command sent by the network equipment, performing an L1L2 mobility command, performing an L1L2 mobility command successfully but a beam failure occurring in the target TRP and/or target beam;
receiving the L1L2 mobility command sent by the network equipment, performing an L1L2 mobility command, performing an L1L2 mobility command successfully but RLF occurring in the target cell;
not receiving the L1L2 mobility command sent by the network equipment, receiving other mobility commands except the L1L2 mobility command, failure or success in performing other mobility commands, or success but critical failure; or
receiving the L1L2 mobility command sent by the network equipment, performing the L1L2 mobility command, performing the L1L2 mobility successfully but a critical failure occurs during the L1L2 mobility procedure.

4. The method according to claim 3, wherein the occurrence of critical failure includes one or more of the following situations:
a timing duration of an L1L2 mobility-related timer exceeds a first threshold;
when receiving the L1L2 mobility command, a timer T310 of a source cell is turned on and a timing duration exceeds a second threshold, or a timer T312 of a source cell is turned on and a timing duration exceeds a third threshold;
after completing the L1L2 mobility command, a timer T310 of a target cell is turned on and a timing duration exceeds a fourth threshold, or a timer T312 of the target cell is turned on and a timing duration exceeds a fifth threshold;
a duration of staying at the target TRP, target beam and/or target cell is less than a sixth threshold; or
frequent ping-pong handover of connected TRP, beam and/or cell.

5. The method according to claim 4, wherein the method further includes:
before recording the L1L2 mobility-related information, receiving threshold information and/or trigger condition indication information sent by the network equipment;
wherein the threshold information includes one or more of the following:
the first threshold;
the second threshold;
the third threshold;
the fourth threshold;
the fifth threshold; or
the sixth threshold.

6. The method according to claim 1, wherein the L1L2 mobility-related information includes one or more of the following:
cell, beam and/or TRP information;
time information; or
first information other than the cell, beam and/or TRP information and time information.

7. The method according to claim 6, wherein the cell, beam and/or TRP information includes one or more of the following:
identifier information of a source TRP, source beam, target TRP and/or target beam;
measurement result information of a source TRP, source beam, target TRP and/or target beam;
measurement configuration information of a configured TRP and/or beam;
measurement result information of TRP and/or beam;
identifier information of TRP and/or beam recovered after failure;
measurement result information of TRP and/or beam recovered after failure;
pre-configured candidate cell configuration information;
identifier information of a source cell and a target cell;
measurement result information of a source cell and a target cell;
measurement result information of a candidate cell;
identifier information of a cell recovered and/or reestablished after failure; or
measurement result information of a cell recovered and/or reestablished after failure.

8. The method according to claim 6, wherein the time information includes one or more of the following:
a time length from execution of the L1L2 mobility command to failure of the L1L2 mobility;
a time length from receiving the L1L2 mobility configuration information to RLF and/or beam failure;
a time length from receiving the L1L2 mobility configuration information to execution of the L1L2 mobility command;
a time length from receiving the L1L2 mobility configuration information to execution of other mobility command, where the other mobility command refers to mobility commands other than the L1L2 mobility commands;
a time length from receiving the L1L2 mobility configuration information to failure of execution of other mobility command;
duration when RLF occurs in a target cell from receiving L1L2 mobility configuration information to successful execution of other mobility command;
beam application time configured by the network equipment;
execution time of the L1L2 mobility command configured by the network equipment;
duration when a timer is turned on from receiving the L1L2 mobility command or L1L2 mobility configuration information to the beam application time;
duration when a timer expires from receiving the L1L2 mobility command or L1L2 mobility configuration information to the beam application time;
user plane data interruption time;
duration when RLF occurs in the target cell from execution of the L1L2 mobility command to success of execution of the L1L2; or
duration when RLF occurs in the target cell from receiving the L1L2 mobility configuration information to success of execution of the L1L2.

9. The method according to claim 6, wherein the first information includes one or more of the following:
indication information of whether to fall back to a source TRP and/or source cell;
random access (RACH) related information;
timing advance (TA) related information;
mobility failure type indication information;
mobility failure cause;
pre-configured candidate cell uplink resource configuration information;
pre-configured candidate cell execution condition information;
indication information on whether to perform a RACH procedure or a RACH-less procedure; or
trigger reason, which is used to indicate a reason for triggering critical failure.

10. The method according to claim 1, wherein the recording L1L2 by the UE, mobility-related information, includes:
recording the L1L2 mobility-related information in at least one new report and/or in at least one defined report.

11. The method according to claim 1, wherein the method further includes:
sending notification information to the network equipment in a first manner; wherein the notification information is used to indicate that the UE stores the L1L2 mobility-related information, and
the first manner includes one or more of the following:
carrying an indication of availability of the L1L2 mobility-related information in an uplink radio resource control (RRC) message; or
using L1L2 signaling indication.

12. The method according to claim 1, wherein before sending the L1L2 mobility-related information to the network equipment, the method further includes:
receiving an obtaining request for the L1L2 mobility-related information sent by the network equipment through a first message;
wherein the first message includes one or more of the following:
UE information request message; or
new message.

13. The method according to claim 12, wherein the sending the L1L2 mobility-related information to a network equipment, includes:
sending the L1L2 mobility-related information to the network equipment through a second message according to the obtaining request;
wherein the second message includes one or more of the following:
UE information response message; or
new message.

14. The method according to claim 1, wherein L1L2 mobility-related cells include: cell under single-connectivity; or a primary cell (PCell) of a primary cell group, a primary cell (PSCell) or secondary cell (SCell) of a secondary cell group under multi-connectivity.

15. An information processing method, applied to a network equipment, comprising:
receiving L1L2 mobility-related information sent by a user equipment (UE);
performing corresponding L1L2 mobility optimization according to the L1L2 mobility-related information;
wherein the L1L2 stands for layer 1 and/or layer 2.

16. The method according to claim 15, wherein the method further includes:
sending L1L2 mobility configuration information to the UE;
wherein the L1L2 mobility configuration information is used to perform L1L2 mobility.

17. An information processing device, applied in a user equipment (UE), comprising: a memory, a transceiver, and a processor;
wherein the memory is used to store a computer program; the transceiver is used to send and receive data under the control of the processor; the processor is used to read the computer program in the memory and perform the following operations:
recording L1L2 mobility-related information;
sending the L1L2 mobility-related information to the network equipment through the transceiver;
wherein the L1L2 stands for layer 1 and/or layer 2.

18. The device according to claim 17, wherein the operations further include:
receiving, through the transceiver, L1L2 mobility configuration information sent by the network equipment;
wherein the L1L2 mobility configuration information is used to perform L1L2 mobility.

19. The device according to claim 17, wherein the recording L1L2 mobility-related information, includes:
recording the L1L2 mobility-related information in case of determining that a recording condition is met; wherein the recording condition includes one or more of the following:
that is not received L1L2 mobility command sent by the network equipment, and a radio link failure (RLF) occurs in a source cell;
that is not received L1L2 mobility command sent by the network equipment, and beam failure occurs at a source transmission and receiving point (TRP) and/or source beam;
receiving the L1L2 mobility command sent by the network equipment, performing an L1L2 mobility command, but failing to access a target TRP and/or target beam;
receiving the L1L2 mobility command sent by the network equipment, performing an L1L2 mobility command, but failing to access a target cell;
receiving the L1L2 mobility command sent by the network equipment, performing an L1L2 mobility command, performing an L1L2 mobility command successfully but a beam failure occurring in the target TRP and/or target beam;
receiving the L1L2 mobility command sent by the network equipment, performing an L1L2 mobility command, performing an L1L2 mobility command successfully but RLF occurring in the target cell;
not receiving the L1L2 mobility command sent by the network equipment, receiving other mobility commands except the L1L2 mobility command, failure or success in performing other mobility commands, or success but critical failure; or
receiving the L1L2 mobility command sent by the network equipment, performing the L1L2 mobility command, performing the L1L2 mobility successfully but a critical failure occurs during the L1L2 mobility procedure.

20. The device according to claim 19, wherein the occurrence of critical failure includes one or more of the following situations:
a timing duration of an L1L2 mobility-related timer exceeds a first threshold;
when receiving the L1L2 mobility command, a timer T310 of a source cell is turned on and a timing duration exceeds a second threshold, or a timer T312 of a source cell is turned on and a timing duration exceeds a third threshold;
after completing the L1L2 mobility command, a timer T310 of a target cell is turned on and a timing duration exceeds a fourth threshold, or a timer T312 of the target cell is turned on and a timing duration exceeds a fifth threshold;
a duration of staying at the target TRP, target beam and/or target cell is less than a sixth threshold; or
frequent ping-pong handover of connected TRP, beam and/or cell.

21. The device according to claim 20, wherein the operations further include:
before recording the L1L2 mobility-related information, receiving, through the transceiver, threshold information and/or trigger condition indication information sent by the network equipment;
wherein the threshold information includes one or more of the following:
the first threshold;
the second threshold;
the third threshold;
the fourth threshold;
the fifth threshold; or
the sixth threshold.

22. The device according to claim 17, wherein the L1L2 mobility-related information includes one or more of the following:
cell, beam and/or TRP information;
time information; or
first information other than the cell, beam and/or TRP information and time information.

23. The device according to claim 22, wherein the cell, beam and/or TRP information includes one or more of the following:
identifier information of a source TRP, source beam, target TRP and/or target beam;
measurement result information of a source TRP, source beam, target TRP and/or target beam;
measurement configuration information of a configured TRP and/or beam;
measurement result information of TRP and/or beam;
identifier information of TRP and/or beam recovered after failure;
measurement result information of TRP and/or beam recovered after failure;
pre-configured candidate cell configuration information;
identifier information of a source cell and a target cell;
measurement result information of a source cell and a target cell;
measurement result information of a candidate cell;
identifier information of a cell recovered and/or reestablished after failure; or
measurement result information of a cell recovered and/or reestablished after failure.

24. The device according to claim 22, wherein the time information includes one or more of the following:
a time length from execution of the L1L2 mobility command to failure of the L1L2 mobility;
a time length from receiving the L1L2 mobility configuration information to RLF and/or beam failure;
a time length from receiving the L1L2 mobility configuration information to execution of the L1L2 mobility command;
a time length from receiving the L1L2 mobility configuration information to execution of other mobility command, where the other mobility command refers to mobility commands other than the L1L2 mobility commands;
a time length from receiving the L1L2 mobility configuration information to failure of execution of other mobility command;
duration when RLF occurs in a target cell from receiving L1L2 mobility configuration information to successful execution of other mobility command;
beam application time configured by the network equipment;
execution time of the L1L2 mobility command configured by the network equipment;
duration when a timer is turned on from receiving the L1L2 mobility command or L1L2 mobility configuration information to the beam application time;
duration when a timer expires from receiving the L1L2 mobility command or L1L2 mobility configuration information to the beam application time;
user plane data interruption time;
duration when RLF occurs in the target cell from execution of the L1L2 mobility command to success of execution of the L1L2; or
duration when RLF occurs in the target cell from receiving the L1L2 mobility configuration information to success of execution of the L1L2.

25. The device according to claim 22, wherein the first information includes one or more of the following:
indication information of whether to fall back to a source TRP and/or source cell;
random access (RACH) related information;
timing advance (TA) related information;
mobility failure type indication information;
mobility failure cause;
pre-configured candidate cell uplink resource configuration information;
pre-configured candidate cell execution condition information;
indication information on whether to perform a RACH procedure or a RACH-less procedure; or
trigger reason, which is used to indicate a reason for triggering critical failure.

26. The device according to claim 17, wherein the recording L1L2 mobility-related information, includes:
recording the L1L2 mobility-related information in at least one new report and/or in at least one defined report.

27. The device according to claim 17, wherein the operations further include:
sending, through the transceiver, notification information to the network equipment in a first manner; wherein the notification information is used to indicate that the UE stores the L1L2 mobility-related information, and
the first manner includes one or more of the following:
carrying an indication of availability of the L1L2 mobility-related information in an uplink radio resource control (RRC) message; or
using L1L2 signaling indication.

28. The device according to claim 17, wherein the operations further include:
before sending the L1L2 mobility-related information to the network equipment, receiving, through the transceiver, an obtaining request for the L1L2 mobility-related information sent by the network equipment through a first message;
wherein the first message includes one or more of the following:
UE information request message; or
new message.

29. The device according to claim 28, wherein the sending the L1L2 mobility-related information to a network equipment, includes:
sending the L1L2 mobility-related information to the network equipment through a second message according to the obtaining request;
wherein the second message includes one or more of the following:
UE information response message; or
new message.

30. The device according to claim 17, wherein L1L2 mobility-related cells include: cell under single-connectivity; or a primary cell (PCell) of a primary cell group, a primary cell (PSCell) or secondary cell (SCell) of a secondary cell group under multi-connectivity.

31. An information processing device, applied in a network equipment, comprising: a memory, a transceiver, and a processor;
wherein the memory is used to store a computer program; the transceiver is used to send and receive data under the control of the processor; the processor is used to read the computer program in the memory and perform the following operations:
receiving, through the transceiver, L1L2 mobility-related information sent by a user equipment (UE);
performing corresponding L1L2 mobility optimization according to the L1L2 mobility-related information;
wherein the L1L2 stands for layer 1 and/or layer 2.

32. The device according to claim 31, wherein the operations further include:
sending, through the transceiver, L1L2 mobility configuration information to the UE;
wherein the L1L2 mobility configuration information is used to perform L1L2 mobility.

33. An information processing apparatus, applied to a user equipment (UE), comprising:
a first recording unit used to record L1L2 mobility-related information;
a first sending unit used to send the L1L2 mobility-related information to the network equipment;
wherein the L1L2 stands for layer 1 and/or layer 2.

34. An information processing apparatus, applied to a network equipment, comprising:
a fourth receiving unit used to receive L1L2 mobility-related information sent by a user equipment (UE);
a first processing unit used to perform corresponding L1L2 mobility optimization according to the L1L2 mobility-related information;
wherein the L1L2 stands for layer 1 and/or layer 2.

35. The apparatus according to claim 34, wherein the method further includes:
a third sending unit used to send L1L2 mobility configuration information to the UE;
wherein the L1L2 mobility configuration information is used to perform L1L2 mobility.

36. A processor-readable storage medium, comprising a computer program stored thereon; wherein the computer program is used to cause a processor to perform the steps in the method according to any one of claims 1 to 16.
